# EUROPEAN PATENT SPECIFICATION

(11) **EP 4 150 000 B1**
(45) Date of publication and mention of the grant of the patent: **27.03.2024**
(21) Application number: 21723784.1
(22) Date of filing: 11.05.2021
(51) Int. Cl.: C08L 9/06, C08L 95/00, C10C 3/00

(54) **CATIONIC LATEX MODIFIED HYDROCARBON BINDER EMULSIONS AND THEIR USE IN THE PREPARATION OF BITUMINOUS PRODUCTS**
DURCH CATIONISCHE LATEX VERÄNDERTE KOHLENWASSERSTOFF BINDEREMULSIONEN UND DEREN VERWENDUNG ZUR HERSTELLUNG VON BITUMENPRODUKTEN
CATIONIC LATEX MODIFIED HYDROCARBON BINDER EMULSIONS AND THEIR USE IN THE PREPARATION OF BITUMINOUS PRODUCTS

(30) Priority: 11.05.2020 EP 20305468
(43) Date of publication of application: 22.03.2023
(73) Proprietor: Vinci Construction, 92000 Nanterre (FR); Scott Bader Company Limited, Wellingborough Northamptonshire NN29 7RL (GB)
(72) Inventor: LEBARBE, Thomas, 33980 AUDENGE (FR); DELFOSSE, Frédéric, 33600 PESSAC (FR); PARISOT, Juliette, 33200 BORDEAUX (FR); JOURDAN, Camille, 80440 GLISY (FR); MARCAULT, Damien, 80470 DREUIL LES AMIENS (FR); ALGER, Luke, Stanwick WELLINGBOROUGH NN9 6QY (GB)
(74) Representative: Regimbeau
(86) International application number: PCT/EP2021/062540
(87) International publication number: WO 2021/228895

(56) References cited:
- EP-A2- 0 246 063
- WO-A1-2012/049650

## Description

### Field of the invention

The present invention relates to cationic latex modified hydrocarbon binder emulsions, processes for the preparation thereof and their use in the preparation of bituminous products.

### Background of the invention

Hydrocarbon binder emulsions, in particular bitumen emulsions are used in a large range of road techniques including surface dressings, microsurfacings and slurry seals, fogseals, tackcoats, cold mixes and storable cold mixes.

Polymer modification of bitumen emulsion offers improvements in performance and durability, mitigation of pavement distress, and reduced life cycle costs when compared to unmodified bitumen emulsions.

Bitumen emulsions are designed and characterized according to several standards and requirements. The European standard EN 13808:2013 specifies the requirements for performance characteristics of cationic bituminous emulsion classes which are suitable for use in the construction and maintenance of roads, airfields and other paved areas. This European standard applies to emulsions of bitumen or fluxed bitumen, and to emulsions of polymer modified bitumen or polymer modified fluxed bitumen, which also includes latex modified bitumen emulsions.

The conventional method of polymer modification of bitumen emulsion uses solid polymers, such as SBS (Styrene-Butadiene-Styrene copolymers) and EVA (Ethyl-vinyl acetate) copolymers, that must be dispersed into the hot bitumen before emulsifying hence leading to processing limitations. First, such a polymer modification required sufficient dispersion and swelling of the polymer in hot bitumen. This includes long processing times in plants as well as the use of specific high shear mills to disperse polymer pellets in bitumen. Second, polymer modification yields a binder with a higher viscosity. This higher viscosity yields emulsifying issues because the binder temperature for emulsification is generally limited to 160-170°C. Moreover, the increase in viscosity limits the polymer content in the residual binder hence including performances limitations.

Polymer emulsions, such as latex, because of their liquid form, present a major advantage in an emulsion formulation. The physical form of the latex allows them to be added into a bitumen emulsion manufactured with a colloidal mill by either: (1) co-milling (milling the latex, bitumen and emulsifier solution in separate streams simultaneously); (2) adding latex into the emulsifier solution; or (3) post-adding latex to the prepared bitumen emulsion. This gives latex modified bitumen emulsion far more processing and performance flexibility.

Latexes are generally prepared as anionic in character and their aqueous applications are therefore limited to uses in compatible systems i.e, anionic systems. Blending a latex elastomer with an anionic bitumen emulsion to impart improvement in properties such as elasticity and ductility of the asphalt residue after the bitumen emulsion has cured is practiced in the art. However, if the bitumen emulsion is cationic, the conventional anionic latex will not be compatible with it.

Cationic bitumen emulsifiers are more versatile compared to anionic emulsifiers because cationic emulsifiers result in a bitumen emulsion that can be worked satisfactorily with a broad range of aggregate, especially those aggregates that contain varying amounts of silica. Silica containing aggregates carry mainly negative charges and cationic bitumen emulsions are therefore preferable because the positively charged bitumen droplets are readily attracted onto the aggregates surface and readily bound to these aggregate surfaces allowing high demulsifying velocity and fast reopening of the paved area to traffic.

Cationic latexes are commonly prepared by converting anionic latexes into cationic latexes. Various techniques have been used to this effect. These techniques are known within the art.

A Japanese patent application published as JPS48-10615 discloses a cationic synthetic rubber latex obtained by charge inversion of an anionic latex wherein the rubber is selected from diene rubbers and ethylene-propylene polymer rubbers. The charge inversion is carried out by adding an adduct of ethylene oxide and an alkylamine and an ampholytic surfactant or lignin derivative to an ordinary anionic synthetic rubber.

European patent no. EP 0 305 039 discloses the preparation of a cationic latex from an anionic latex by adding a cationic stabilizer to an anionic latex and lowering the pH provided the anionic latex contains a dispersing agent effective between the pH of 8.5 and 6.5. The such obtained cationic latex is compatible with a cationic emulsion.

United States Patent no. US 5 045 576 discloses a method of converting an anionic latex to a cationic latex by the addition of a steric stabilizer and a cationic surfactant. The patent also provides for a method of using the cationic latex prepared by the conversion, in a bitumen emulsion. The converted latex provides improved torsional recovery properties to the cured bitumen emulsion.

A United States Patent application published as US 0 215 286 discloses a composition for rejuvenating asphalt comprises an asphalt binder, water, a cationic surfactant, a recycling agent, and a cationic coagglomerated styrene butadiene rubber latex, which includes sulfur and a vulcanizing agent.

However, such methods of conversion of anionic latexes to cationic latexes implies the initial preparation of anionic latexes, thus requiring substantial preparation time and processes. Moreover, the charge inversion process induces significant amounts of emulsifiers and steric stabilizers to stabilize the particles during the pH modification and charge inversion. These significant amounts of added emulsifiers and steric stabilizers may have a negative influence on the cohesion build-up of the bituminous products.

Emulsion copolymer latexes prepared by emulsion polymerisation of alkyl acrylate ester, and/or alkyl methacrylate ester monomers, sometimes in combination with a styrene monomer, and stabilised by one or more cationic surfactant stabilisers, are known within the art.

United States Patent no. US5126392 discloses various alkyl acrylate and/or alkyl methacrylate emulsion copolymers stabilised with various cationic surfactant stabilisers. In particular, Preparation Example 12 is an emulsion homopolymer latex of butyl acrylate stabilised with stearyltrimethylammonium chloride and prepared by an emulsion polymerisation process using a redox initiator system.

A Japanese patent application published as JPS52-136286 apparently discloses a butyl acrylate emulsion homopolymer latex stabilised with lauryltrimethylammonium chloride.

A different Japanese patent application, published as JP2010-242054, discloses an emulsion copolymer latex of isobutyl methacrylate and tertiary butyl methacrylate stabilised with lauryltrimethylammonium chloride.

United States Patent no. US6756437 discloses various emulsion copolymer latexes stabilised with cetyltrimethylammonium bromide. A methyl methacrylate homopolymer, a methyl methacrylate copolymer with butyl acrylate, and copolymers of styrene with either butyl acrylate or 2-ethylhexyl acrylate are all disclosed within this document, although the latexes are a little unusual in that they are prepared by an emulsion polymerisation process that also incorporates a dispersion of inorganic nanoparticles.

A Chinese patent application published as CN104372690 discloses the preparation of what appears to be a range of emulsion copolymer latexes from different combinations of styrene and butyl acrylate monomers, all stabilised by cetyltrimethylammonium chloride. Emulsion copolymer latexes prepared from styrene and different alkyl acrylate and/or alkyl methacrylate ester monomers, all incorporating a cationic surfactant stabiliser, are also disclosed in United States Patent no. US6051640.

Emulsion copolymer latexes prepared from a combination of methyl methacrylate, butyl acrylate and hydroxyethyl methacrylate, stabilised with a range of different cationic surfactant stabiliser species, is disclosed in United States Patent no. US5049383.

A Chinese patent application, published as CN104805732, discloses as one of its examples an emulsion copolymerisation, stabilised by cetyltrimethylammonium bromide, of styrene, n-butyl acrylate, hydroxyethyl methacrylate and glycidyl methacrylate. An emulsion copolymerisation process for the preparation of latexes of this type and incorporating a seed stage into the process is also taught.

An International patent application, published as WO 98/55522, discloses core-shell emulsion copolymer latexes prepared by a multi-stage emulsion copolymerisation process and comprising a cationic surfactant stabiliser, styrene monomer, butyl acrylate monomer, and ethylene glycol dimethacrylate cross-linking monomer.

Acrylic and styrene-acrylic latexes have sometimes been added to cationic bitumen emulsions such as described in United States Patent no. US 5 045 576. However, the charge inversion technique to compatibilize such latexes with cationic bitumen emulsion induce large quantities of surfactant stabilisers that may have a negative influence on the curing and properties of the end-products (surface dressing, fogseal, microsurfacing).

It is also possible to modify cationic bitumen emulsion with a latex which contains nonionic emulsifiers. The such obtained emulsion is stable, however, the non-ionic surfactant used to stabilize the latex remains in the binder after demulsification and can seriously damage the cohesion build-up and the water resistance of the cured bituminous product.

Finally, most of the cationic latex available for cationic bitumen emulsion modification are styrene-butadiene rubbers. Styrene-butadiene rubbers, despite their efficient elastomeric properties, show poor UV and air oxidation resistance compared to (meth)acrylic and styrene-(meth)acrylic polymers.

A need therefore exists for the provision of stable cationic latex modified hydrocarbon binder emulsions (e.g. bitumen emulsions), that deliver superior performances such as improved rheological properties, allow preparing bituminous products with increased cohesion build-up, superior resistance to ageing due to air oxidation and UV damage, and overcome the disadvantages of the prior art.

### SUMMARY OF THE INVENTION

In a first aspect, the present invention relates to a process for preparing a cationic latex modified bitumen emulsion comprising the steps of:
(a) preparing a cationic copolymer latex emulsion by an emulsion polymerisation of polymerizable monomers, said polymerizable monomers comprising
   A- one or more non-ionic acrylate ester and/or methacrylate ester monomer(s), and
   B- optionally styrene monomer and/or one or more non-ionic styrene derivative monomer(s),
   C- optionally one or more cross-linking monomer(s) having two or more ethylenically unsaturated (C=C) double bonds susceptible to free radical copolymerisation,
   D- optionally one or more epoxy functional monomer(s) having one C=C double bond susceptible to free radical copolymerisation and one epoxide functional group,

   wherein said polymerizable monomers do not comprise any aliphatic conjugated diene monomer,
   in presence of a cationic stabilizing surfactant, and
(b) adding the cationic copolymer latex emulsion resulting from step (a) to a cationic bitumen emulsion, or
(b') adding the cationic copolymer latex emulsion resulting from step (a) to an emulsifier solution, said emulsifier solution comprising water, one or more cationic surfactant(s), one or more acid(s) and optionally additives to provide a mixture, and adding the resulting mixture to bitumen;
to form a cationic latex modified bitumen emulsion.

In a second aspect, the present invention relates to a cationic latex modified bitumen emulsion comprising bitumen, one or more cationic surfactants and a cationic copolymer latex emulsion prepared by the emulsion polymerisation of polymerizable monomers as described above.

In a third aspect, the present invention relates to the use of a cationic latex modified bitumen emulsion according to the invention for preparing surface dressings, bituminous concrete emulsions, microsurfacings and slurry seals, fog seals, cape seals and tack coats.

In a fourth aspect, the present invention also relates to a method for preparing a bituminous product which comprises the step of contacting solid particles with the cationic latex modified bitumen emulsion of the invention.

### DETAILED DESCRIPTION OF THE INVENTION

The present invention provides a process for preparing a cationic latex modified hydrocarbon binder emulsion, in particular a process for preparing a cationic latex modified bitumen emulsion. The process of the present invention comprises the steps of:
(a) preparing a cationic copolymer latex emulsion by emulsion polymerisation of polymerizable monomers, said polymerizable monomers comprising :
   A- one or more non-ionic acrylate ester and/or methacrylate ester monomer(s);
   B- optionally styrene monomer and/or one or more non-ionic styrene derivative monomer(s);
   C- optionally one or more cross-linking monomer(s) having two or more ethylenically unsaturated (C=C) double bonds susceptible to free radical copolymerisation;
   D- optionally one or more epoxy functional monomer(s) having one C=C double bond susceptible to free radical copolymerisation and one epoxide functional group;
wherein said polymerizable monomers do not comprise any aliphatic conjugated diene monomer,
in presence of one or more cationic stabilizing surfactant(s), and
(b) adding the cationic copolymer latex emulsion resulting from step (a) to a cationic hydrocarbon binder emulsion, or
(b') adding the cationic copolymer latex emulsion resulting from step (a) to an emulsifier solution, said emulsifier solution comprising water, one or more cationic surfactant(s), one or more acid(s) and optionally additives, and adding the resulting mixture to hydrocarbon binder;
to form a cationic latex modified hydrocarbon binder emulsion.

The cationic latex modified hydrocarbon binder emulsions prepared by such a process are stable and exhibit improved rheological properties. Improved recovery percentage and non-recoverable creep compliance values compared to neat bitumen emulsions according to Multiple Stress Creep and Recovery Test (MSCRT) are achieved. Furthermore, the latex modified hydrocarbon binder emulsions of the present invention show an improvement of the cohesion build-up of the microsurfacing prepared with the emulsions from the present invention compared to bitumen emulsions modified with SBR latex obtained by charge inversion of an anionic SBR latex.

### Step (a): preparation of a cationic copolymer latex emulsion

The cationic copolymer latex emulsion is prepared by emulsion polymerisation of polymerizable monomers, said polymerizable monomers comprising:
A- one or more non-ionic acrylate ester and/or methacrylate ester monomer(s);
B- optionally styrene monomers and/or one or more non-ionic styrene derivative monomer(s);
C- optionally one or more cross-linking monomer(s) having two or more ethylenically unsaturated (C=C) double bonds susceptible to free radical copolymerisation;
D- optionally one or more epoxy functional monomer(s) having one C=C double bond susceptible to free radical copolymerisation and one epoxide functional group;

wherein said polymerizable monomers do not comprise any aliphatic conjugated diene monomer,
in presence of one or more cationic stabilizing surfactant(s).

### Non-ionic acrylate ester and/or methacrylate ester monomers (component A)

Suitable non ionic acrylate or methacrylate ester monomers (component A) may be alkyl acrylate or alkyl methacrylate ester monomers. Suitable alkyl acrylate and alkyl methacrylate esters monomers may have between 1 and 30 carbon atoms in the alkyl ester portion of the molecule. Suitable examples include methyl acrylate, methyl methacrylate, n-propyl acrylate, n-propyl methacrylate, isopropyl acrylate, isopropyl methacrylate, n-butyl acrylate, isobutyl acrylate, tert-butyl acrylate, n-butyl methacrylate, isobutyl methacrylate, tert-butyl methacrylate, n-pentyl acrylate, neopentyl acrylate, n-pentyl methacrylate, neopentyl methacrylate, n-hexyl acrylate, n-hexyl methacrylate, n-heptyl acrylate, n-heptyl methacrylate, n-octyl acrylate, isooctyl acrylate, n-octyl methacrylate, isooctyl methacrylate, 2-octyl acrylate, 2-octyl methacrylate, 2-ethylhexyl acrylate, 2-ethylhexyl methacrylate, 1-nonyl acrylate, 1-nonyl methacrylate, 2-nonyl acrylate, 2-nonyl methacrylate, 3,7-dimethyl-1-octyl acrylate, 3,7-dimethyl-1-octyl methacrylate, 3,7-dimethyl-3-octyl acrylate, 3,7-dimethyl-3-octyl methacrylate, 1,decyl acrylate, 1-decyl methacrylate, 2-decyl acrylate, 2-decyl methacrylate, isodecyl acrylate, isodecyl methacrylate, 1-undecyl acrylate, 1-undecyl methacrylate, 2-butyl-1-octyl acrylate, 2-butyl-1-octyl methacrylate, 1-dodecyl acrylate, 1-dodecyl methacrylate, lauryl acrylate, lauryl methacrylate, 2-dodecyl acrylate, 2-dodecyl methacrylate, 1-tridecyl acrylate, 1-tridecyl methacrylate, 1-tetradecyl acrylate, 1-tetradecyl methacrylate, myristyl acrylate, myristyl methacrylate, 2-tetradecyl acrylate, 2-tetradecyl methacrylate, pentadecyl acrylate, pentadecyl methacrylate, 1-hexadecyl acrylate, 1-hexadecyl methacrylate, cetyl acrylate, cetyl methacrylate, palmityl acrylate, palmityl methacrylate, 2-hexadecyl acrylate, 2-hexadecyl methacrylate, 1-heptadecyl acrylate, 1-heptadecyl methacrylate, margaryl acrylate, margaryl methacrylate, 1-octadecyl acrylate, 1-octadecyl methacrylate, stearyl acrylate, stearyl methacrylate, 1-nonadecyl acrylate, 1-nonadecyl methacrylate, 2-octyl-1-decyl acrylate, 2-octyl-1-decyl methacrylate, eicosyl acrylate, eicosyl methacrylate, arachidyl acrylate, arachidyl methacrylate, heneicosyl acrylate, heneicosyl methacrylate, 1-docosyl acrylate, 1-docosyl methacrylate, behenyl acrylate, behenyl methacrylate, tricosyl acrylate, tricosyl methacrylate, 2-decyl-1-tetradecyl acrylate, 2-decyl-1-tetradecyl methacrylate, tetracosyl acrylate, tetracosyl methacrylate, lignoceryl acrylate, lignoceryl methacrylate, pentacosyl acrylate, pentacosyl methacrylate, hexacosyl acrylate, hexacosyl methacrylate, heptacosyl acrylate, hexacosyl methacrylate, octacosyl acrylate, octacosyl methacrylate, nonacosyl acrylate, nonacosyl methacrylate, triacontyl acrylate, triacontyl methacrylate, melissyl acrylate, melissyl methacrylate, hentriacontyl acrylate, hentriacontyl methacrylate, dotriacontyl acrylate, dotriacontyl methacrylate and any mixtures thereof.

Other non-ionic acrylate or methacrylate ester monomers useful in the practice of the invention include hydroxyalkyl ester acrylates and methacrylates (such as 2-hydroxyethyl acrylate, hydroxyethyl methacrylate, 2-hydroxypropyl acrylate, hydroxypropyl methacrylate, hydroxybutyl acrylate, hydroxybutyl methacrylate, and the like), acrylate and methacrylate esters bearing an aromatic hydrocarbon ring in the alcohol portion of the ester molecule (such as benzyl acrylate, benzyl methacrylate, phenoxyethyl acrylate or phenoxyethyl methacrylate), acrylate and methacrylate esters containing an ether linkage in the alcohol portion of the ester molecule (such as methoxyethyl acrylate, methoxyethyl methacrylate, phenoxyethyl acrylate or phenoxyethyl methacrylate) and heterocyclic acrylate or methacrylate esters (such as tetrahydrofurfuryl acrylate, tetrahydrofurfuryl methacrylate, N-morpholino acrylate, N-morpholino methacrylate).

In some preferred embodiments, the non-ionic acrylate or methacrylate ester monomer (component A) is completely free from any silicon atoms or any silicon-containing functional group. In some embodiments, the non-ionic acrylate or methacrylate ester monomer is completely free from any fluorine atoms or any fluorine-containing functional group.

Preferably, the one or more non-ionic acrylate and/or methacrylate ester monomers (component A above) is/are selected from the group consisting of alkyl acrylate esters, alkyl methacrylate esters and any mixtures thereof. More preferably, the one or more non-ionic acrylate and/or methacrylate ester monomers is/are selected from the group consisting of C₁-C₈ alkyl acrylate, C₁-C₈ alkyl methacrylate esters and any mixtures thereof. In other words, the one or more non-ionic acrylate and/or methacrylate ester monomers is/are selected from the group consisting of from methyl acrylate, methyl methacrylate, n-propyl acrylate, n-propyl methacrylate, isopropyl acrylate, isopropyl methacrylate, n-butyl acrylate, isobutyl acrylate, tert-butyl acrylate, n-butyl methacrylate, isobutyl methacrylate, tert-butyl methacrylate, n-pentyl acrylate, neopentyl acrylate, n-pentyl methacrylate, neopentyl methacrylate, n-hexyl acrylate, n-hexyl methacrylate, n-heptyl acrylate, n-heptyl methacrylate, n-octyl acrylate, isooctyl acrylate, n-octyl methacrylate, isooctyl methacrylate, 2-octyl acrylate, 2-octyl methacrylate, 2-ethylhexyl acrylate, 2-ethylhexyl methacrylate, and any mixtures thereof.

Even more preferably, the one or more non-ionic acrylate or methacrylate ester monomer is selected from methyl methacrylate, n-butyl acrylate, 2-ethylhexyl acrylate and mixtures thereof.

Most preferably, the acrylate or methacrylate ester monomer is butyl acrylate.

### Styrene monomers and non-ionic styrene derivative monomers (component B)

Optionally, the polymerizable monomers may comprise a component B, said component B being styrene monomer and/or one or more styrene derivative monomer(s).

It is understood that component B may represent a mixture comprising styrene monomer and at least one styrene derivative monomer or a mixture of different styrene derivative monomers.

Suitable styrene derivative monomers, if used, include alpha-methyl styrene, vinyl toluene, ethyl styrene, 2-chlorostyrene, 3-chlorostyrene, 4-chlorostyrene, 2-bromostyrene, 3-bromostyrene, 4-bromostyrene, alpha-bromostyrene, beta-bromostyrene and tertiary butyl styrene.

If a component B is used, it is preferably a monomer selected from the group consisting of styrene, alpha-methyl styrene, vinyl toluene, and mixtures thereof, more preferably it is styrene monomer.

### Cross-linking monomers having two or more ethylenically unsaturated (C=C) double bonds susceptible to free radical copolymerisation (component C)

Optionally, the polymerizable monomers may comprise a component C, said component C being one or more cross-linking monomer(s) having two or more ethylenically unsaturated (C=C) double bonds susceptible to free radical copolymerisation.

It is understood that component C may represent a mixture comprising different cross-linking monomers having two or more ethylenically unsaturated (C=C) double bonds susceptible to free radical copolymerisation. Preferably, component C represents one cross-linking monomer having two or more ethylenically unsaturated (C=C) double bonds susceptible to free radical copolymerisation.

Suitable cross-linking monomers include methylene-bis-acrylamide, divinylbenzene, allyl acrylate, allyl methacrylate, ethylene glycol diacrylate or dimethacrylate, di-or-polyacrylates, di-or-polymethacrylates of other di-or-polyfunctional alcohols such as 1,3-butanediol, 1,4-butanediol, 1,6-hexanediol, diethylene glycol, triethylene glycol, dipropylene glycol, tripropylene glycol, trimethylolpropane, ethoxylated/propoxylated trimethylolpropane, glycerol, ethoxylated/propoxylated glycerol, pentaerythritol, ethoxylated/propoxylated pentaerythritol, and the like.

### Epoxy functional monomers having one C=C double bond susceptible to free radical copolymerisation and one epoxide functional group (component D)

Optionally, the polymerizable monomers may comprise a component D, said component D being one or more epoxy functional monomer(s) having one C=C double bond susceptible to free radical copolymerisation and one epoxide group.

It is understood that component D may represent a mixture of different one epoxy functional monomer having one C=C double bond susceptible to free radical copolymerisation and one epoxide group.

Suitable epoxy functional monomers include allyl glycidyl ether, glycidyl acrylate, glycidyl methacrylate and mixtures thereof. The preferred epoxy functional monomers are glycidyl acrylate, glycidyl methacrylate and mixtures thereof. The more preferred epoxy functional monomer is glycidyl methacrylate.

### Cationic stabilizing surfactant (component E)

The cationic stabilizing surfactant used in the preparation of the cationic copolymer latex emulsion used in the practice of the invention may be polymerisable or non-polymerisable.

Polymerisable cationic stabilizing surfactant are susceptible to free radical copolymerisation with the polymerizable monomers (component A, B, C, D) under the conditions employed in the art of emulsion polymerization. Usually, such polymerisable cationic stabilizing surfactant would contain at least one C=C double bond susceptible to polymerisation under the action of a free radical initiator.

Non-polymerisable cationic stabilizing surfactant is construed to mean that no significant polymerization of the surfactant occurs under the conditions employed in the art of emulsion polymerization.

The use of non-polymerisable cationic stabilizing surfactant is preferred within the practice of the invention.

Suitable non-polymerisable cationic stabilizing surfactant, i.e. surfactants whose dispersive component has at least one positive electrical charge, include, but are not limited to, C₈-C₃₀ alkyl-, aralkyl- or heterocyclyl-containing primary, secondary, tertiary or quaternary ammonium salts, alkanolammonium salts, pyridinium salts, imidazolinium salts, oxazolinium salts, morpholinium salts, thiazolinium salts, and salts of amine oxides, quinolinium salts, isoquinolinium salts, tropylium salts, sulphonium salts, and phosphonium salts. Furthermore, polyglycol ether derivatives may also carry at least one positive electrical charge in acidic medium, owing to the formation of an oxonium structure.

Preferably the cationic stabilizing surfactant is a salt of the following formula (I): 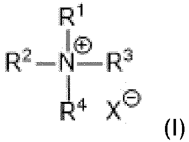
wherein R¹ to R⁴ are each independently selected from the group consisting of C₈-C₃₀ alkyl group, such as C₁₂-C₂₅ alkyl group, benzyl group and pyridyl group, provided that at least two of R¹ to R⁴ are C₁-C₄ alkyl, preferably methyl, and
X- is a halogen, preferably chloride or bromide, or an alkylsulphate, such as methylsulphate or ethylsulphate.

In preferred embodiments, in compound of formula (I), R¹ to R³ are a methyl and R⁴ is a C₈-C₃₀, preferably a C₁₂-C₂₅, alkyl group.

Preferred cationic stabilizing surfactants may be selected from the group consisting of alkyltrimethylammonium salts wherein the alkyl group contains from 8 to 30 (preferably 12 to 25) carbon atoms and the counterion of the salt is a member selected from the group consisting of chloride, bromide, methylsulphate (sometimes rendered 'methosulphate'), and ethylsulphate; dialkyldimethylammonium salts wherein the alkyl group contains from 8 to 30 (preferably 12 to 25) carbon atoms and the counterion of the salt is a member selected from the group consisting of chloride, bromide, methylsulphate, and ethylsulphate; alkylbenzyldimethylammonium salts wherein the alkyl group contains from 8 to 30 (preferably 12 to 25) carbon atoms and the counterion of the salt is a member selected from the group consisting of chloride, bromide, methylsulphate, and ethylsulphate; alkylpyridinium salts wherein the alkyl group contains from 8 to 30 (preferably 12 to 25) carbon atoms and the counterion of the salt is a member selected from the group consisting of chloride, bromide, methylsulphate, and ethylsulphate; ethoxylated C₈ to C₂₅ alkylamine complexes with C8 to C25 alkylguanidines, such as the commercial product Aerosol^{®} C-61 (Solvay); and cationic surfactants derived from diamines, sometimes termed 'gemini surfactants', examples of which are N,N'-(lauryldimethyl)ethylenediamine dibromide and N,N,N',N',N'-pentamethyl-N-tallow-1 ,3-propanediammonium chloride.

More preferably, the cationic stabilizing surfactant is selected from the group consisting of alkyltrimethylammonium chlorides, wherein the alkyl group contains from 8 to 30 (preferably 12 to 25) carbon atoms; alkyltrimethylammonium bromides, wherein the alkyl group contains from 8 to 30 (preferably 12 to 25) carbon atoms; alkyltrimethylammonium methylsulphates (or methosulphates), wherein the alkyl group contains from 8 to 30 (preferably 12 to 25) carbon atoms; the 'gemini surfactants' N,N'-(lauryldimethyl)ethylenediamine dibromide and N,N,N',N',N'-pentamethyl-N-tallow-1,3-propanediammonium chloride; and ethoxylated C8 to C25 alkylamine complexes with C8 to C25 alkylguanidines, such as the aforementioned commercial product Aerosol^{®} C-61.

Most preferably, the cationic stabilizing (component E above) is selected from the group consisting of N,N,N-trimethyl-1-dodecylammonium chloride, N,N,N-trimethyl-1-octadecylammonium chloride, coco-alkyltrimethyl quaternary ammonium chloride, trimethylsoya-alkyl quaternary ammonium chloride, N,N,N-trimethyl-1-hexadecylammonium chloride, N,N,N-trimethyl-1-docosylammonium methylsulphate, N,N,N',N',N'-pentamethyl-N-tallow-1,3-propanediammonium chloride, and the ethoxylated octadecylamine complex with octadecylguanidine that is commercially supplied under the tradename Aerosol^{®} C-61.

The polymerizable monomers used in the process of the present invention for preparing a cationic copolymer latex emulsion do not comprise any aliphatic conjugated diene monomer. Aliphatic conjugated diene monomers are those containing two conjugated C=C double bonds, in other words containing the structural unit >C=C-C=C<., wherein both conjugated C=C double bonds are susceptible to free radical polymerization under the conditions employed in the art of emulsion polymerisation and neither of the conjugated C=C double bonds is included within an aromatic ring structure. Therefore, neither styrene monomer nor styrene derivative monomers are aliphatic conjugated diene monomers within the practice of the invention because, although they do contain the structural unit >C=C-C=C<, only one of their C=C double bonds is susceptible to free radical polymerization under the conditions employed in the art of emulsion polymerization while their other C=C double bond is contained within an aromatic ring structure.

Examples of aliphatic conjugated diene monomers thus excluded from the cationic copolymer latex emulsion prepared according to the present invention include butadiene, isoprene and chloroprene. It is especially advantageous to exclude butadiene monomer from the practice of the invention. Indeed, butadiene copolymers latexes are known to show poor ageing resistance to air and UV. Resulting pavements, especially on wearing courses, are highly subjected to air oxidation. Besides butadiene being a gas, it is not easily handled in industrial processes.

The weight percentage of the total monomer components A + B + C + D preferably ranges from 30% to 60% by weight, more preferably from 40% to 55% by weight, most preferably from 45% to 50% by weight, expressed as a percentage of the total weight of the cationic copolymer latex emulsion.

As noted above, the emulsion polymerisation is performed in presence of one or more cationic stabilizing surfactants (component E). The one or more cationic stabilizing surfactants are preferably present in an amount ranging from 0.6% to 3.6% by weight, preferably from 1.2% to 3.0% by weight, more preferably from 1.6% to 2.4% by weight, expressed as a percentage of the total weight of the cationic copolymer latex emulsion.

### Emulsion polymerisation processes

The cationic copolymer latex emulsion may be prepared by any one of the emulsion polymerisation processes known within the art.

### One single monomer emulsion feed stage

In a typical process, the monomer component A (together with optional monomer components B, C and D, if used) is emulsified into deionised water with the aid of the cationic stabilizing surfactant (component E). The resulting monomer emulsion is then fed slowly into stirred deionised water in a suitable reaction vessel concurrently with a radical initiator (component F), in solution, preferably in aqueous solution. Preferably, the contents of the reaction vessel are heated to an elevated temperature of 40° to 90°C, more preferably a temperature of 57° to 87°C, even more preferably a temperature of 77° to 87° C, most preferably a temperature of 83°C to 87° C, before commencement of the monomer emulsion and radical initiator (component F) solution feeds.

Optionally, not all of the cationic stabilizing surfactant, component E, may be used to prepare the monomer emulsion. Instead, a small proportion of this surfactant may be dissolved in the deionised water in the reaction vessel prior to heating the contents of this vessel up to the chosen elevated temperature. In this process variant, the amount of cationic stabilizing surfactant (component E) dissolved in the deionised water in the reaction vessel is between 4%wt and 20%wt of the total weight of cationic stabilized surfactant, preferably between 5%wt and 15%wt of the total weight of cationic stabilizing surfactant, more preferably between 8%wt and 12%wt of the total weight of the cationic stabilizing surfactant.

In embodiments of the invention in which not all of the cationic stabilizing surfactant (component E) is used to prepare the monomer emulsion, some instead being pre-dissolved in the deionised water in the reaction vessel, the total amount of cationic stabilizing surfactant (component E) employed within the emulsion polymerisation process should still lie within the range 0.6% by weight to 3.6% by weight, preferably within the range 1.2% by weight to 3.0% by weight, more preferably within the range 1.6% by weight to 2.4% by weight, expressed as a percentage of the total weight of the cationic copolymer latex emulsion .

The amount of radical initiator (component F) added suitably ranges from 0.1% by weight to 0.5% by weight, preferably from 0.2% by weight to 0.4% by weight, more preferably from 0.2% by weight to 0.3% by weight, based on the total weight of the cationic latex copolymer emulsion. The concentration of the radical initiator in the solution that is fed is 2% by weight to 10% by weight, preferably 4% by weight to 8% by weight, more preferably 4.5% by weight to 6.5% by weight, based on the weight of the solution that is fed.

Preferably the deionised water in the reaction vessel is maintained at a temperature of 40° to 90° C, more preferably at a temperature of 57° to 87° C, even more preferably at a temperature of 77° to 87°C, most preferably at a temperature of 83°C to 87°C to facilitate the emulsion copolymerisation reaction. The monomer emulsion feed and radical initiator solution feed are preferably fed into the deionised water in the reaction vessel over a period of 4 hours to 8 hours, more preferably over a period of 5 hours to 7 hours, most preferably over a period of 5.5 hours to 6.5 hours. After the completion of the feeds, the cationic copolymer latex emulsion is then stirred at the same reaction temperature for a period of 30 minutes to 60 minutes before at least one further radical initiator, referred as component G, in solution, preferably aqueous solution, is added in order to copolymerise any remaining free monomer. The further radical initiator (component G) solution may be added to the reaction vessel at the same temperature as the radical initiator (component F) solution (i.e. at the reaction temperature) or may be added at a lower temperature. The addition of the further radical initiator (component G) solution at a lower temperature is preferred, preferably 10°C lower, more preferably 20°C lower, most preferably 25°C lower.

Both the radical initiator (component F) and the further radical initiator (component G) may be either a so-called "thermal" radical initiator or a so-called "redox" radical initiator pair. Suitable thermal free radical initiators include water-soluble inorganic persulfate compounds, such as ammonium persulfate, potassium persulfate and sodium persulfate, and oil soluble, free radical producing agents, such as 2,2'-azobisisobutyronitrile, and the like, and mixtures thereof. Water-soluble inorganic persulphate compounds are the preferred type of thermal initiator.

Redox initiator pairs typically comprise two components, an oxidant and a reductant, which are added separately to the reaction vessel. Suitable oxidants include peroxides such as hydrogen peroxide, benzoyl peroxide, acetyl peroxide, and lauryl peroxide; organic hydroperoxides, such as cumene hydroperoxide, t-butyl hydroperoxide and t-amyl hydroperoxide; organic peracids, such as peracetic acid; and oxidant inorganic salts such as ammonium persulphate, potassium persulphate, sodium persulphate, and sodium bromate. Suitable reductants include sodium bisulfite, sodium formaldehyde sulphoxylate or ascorbic acid, transition metal salts (especially ferrous sulphate), hydrazine, and the like. In recent years sodium formaldehyde sulphoxylate use has been superseded by formaldehyde-free species having similar chemical activity, such as the proprietary products Bruggolit^{®} FF6M and Bruggolit^{®} FF7 offered by Brüggemann GmbH & Co, KG, which are believed to be sulphinate salts.

The further radical initiator (component G) may be the same as the free radical initiator (component F), or different. For example, the free radical initiator (component F) may be a thermal initiator while the further free radical initiator (component G) may be a redox initiator pair. Alternatively, free radical initiator (component F) may be one type of redox initiator pair whilst further free radical initiator (component G) may be a different type of redox initiator pair.

### Seed stage process

In some embodiments of the invention, the cationic copolymer latex emulsion is prepared by a process often referred to as a "seed stage" process. This differs from the process described above in that, before the commencement of the feeds of monomer emulsion and radical initiator (component F) solution, a small amount of monomer emulsion and radical initiator solution are first added to the contents of the reaction vessel at the chosen elevated temperature. The monomers within this small amount of monomer emulsion then polymerise before the feeds are commenced, the small amount of pre-polymer thus formed being termed the "seed stage". If a seed stage process is adopted for the preparation of the cationic copolymer latex emulsion to be used within the invention, the amount of monomer emulsion added to the reaction vessel to form the seed stage suitably lies within the range 1%wt to 10%wt of the total monomer emulsion, preferably within the range 1.5%wt to 7.5%wt of the total monomer emulsion, more preferably within the range 2%wt to 6%wt of the total monomer emulsion.

If a seed stage process is adopted for the preparation of the emulsion copolymer latex to be used within the invention, it is not necessary for the radical initiator used to form the seed stage (hereinafter referred to as component H) to be the same as that fed in solution concurrently with the monomer emulsion feed (the component F radical initiator) nor, indeed, is it necessary for the seed stage radical initiator (component H) to be the same as the component G initiator used to complete the polymerisation of any free monomer remaining at the end of the preparation process. If component H is different from components F and G, then component H may be either a thermal initiator or a redox initiator pair.

In embodiments of the invention in which the cationic copolymer latex emulsion is prepared by an emulsion polymerisation process having a single monomer emulsion feed stage (with or without a seed stage and with or without the pre-addition of some of the cationic stabilizing surfactant (component E) to the deionised water charged at the outset to the reaction vessel), it is preferred that the one or more non-ionic acrylate ester and/or methacrylate ester monomers (component A) is/are employed in an amount ranging from 15% to 100%, preferably from 75% by weight to 100% by weight, expressed as a percentage of the total monomer components A + B + C + D. More preferably, the one or more non-ionic acrylate ester and/or methacrylate ester monomers (component A) is/are employed in an amount ranging from 75% by weight to 99.995% by weight, even more preferably in an amount ranging from 80% by weight to 99.995% by weight, most preferably in an amount ranging from 90% to 99.995% by weight, expressed as a percentage of the total monomer components A + B + C + D.

In some embodiments of the invention in which the cationic copolymer latex emulsion is prepared by an emulsion polymerisation process having a single monomer emulsion feed stage (with or without a seed stage and with or without the pre-addition of some of the cationic stabilizing surfactant (component E) to the deionised water charged at the outset to the reaction vessel), the one or more non-ionic acrylate ester and/or methacrylate ester monomers (component A), is/are employed in an amount ranging from 15% by weight to 75% by weight, expressed as a percentage of the total monomer components A + B + C + D. More preferably in these embodiments, the one or more non-ionic acrylate ester and/or methacrylate ester monomers (component A), is/are employed in an amount ranging from 15% by weight to 60% by weight, even more preferably in an amount ranging from 20% by weight to 50% by weight, most preferably in an amount ranging from 25% to 35% by weight, expressed as a percentage of the total monomer components A + B + C + D.

In embodiments of the invention in which the copolymer latex emulsion is prepared by an emulsion polymerisation process having a single monomer emulsion feed stage (with or without a seed stage and with or without the pre-addition of some of the cationic stabilizing surfactant (component E) to the deionised water charged at the outset to the reaction vessel), it is preferred that the styrene monomer and/or one or more non-ionic styrene derivative monomers (component B) is/are employed in an amount ranging from 0% by weight to 85% by weight, expressed as a percentage of the total weight of monomer components A + B + C + D. More preferably, the styrene monomer and/or one or more non-ionic styrene derivative monomers (component B) is/are employed in an amount ranging from 0% by weight to 20% by weight, preferably 0% by weight to 10% by weight, expressed as a percentage of the total monomer components A + B + C + D. When present, component B is typically employed in an amount ranging from 0.1% by weight to 85% by weight, preferably from 0.1% by weight to 20% by weight, more preferably from 0.1% by weight to 10% by weight, expressed as a percentage of the total weight of monomer components A + B + C + D.

More preferably, according to the previous embodiments, the styrene monomer and/or one or more non-ionic styrene derivative monomers (component B) is/are employed in an amount of 0% by weight, expressed as a percentage of the total monomer components A + B + C + D; in other words, in these embodiments of the invention in which the emulsion copolymer latex is prepared by an emulsion polymerisation process having a single monomer emulsion feed stage (with or without a seed stage and with or without the pre-addition of some of the cationic stabilizing surfactant (component E) to the deionised water charged at the outset to the reaction vessel) that the styrene monomer and/or one or more non-ionic styrene derivative monomers (optional component B) is/are omitted from the emulsion polymerisation process.

In some embodiments of the invention in which the copolymer latex emulsion is prepared by an emulsion polymerisation process having a single monomer emulsion feed stage (with or without a seed stage and with or without the pre-addition of some of the cationic stabilizing surfactant (component E) to the deionised water charged at the outset to the reaction vessel), the styrene monomer and/or one or more non-ionic styrene derivative monomers (component B) is/are employed in an amount ranging from 20% by weight to 85% by weight, expressed as a percentage of the total weight of monomer components A + B + C + D, more preferably from 40% to 80% by weight, most preferably from 60% to 75% by weight, expressed as a percentage of the total weight of monomer components A + B + C + D.

It is also preferred that a cross-linking monomer (component C) is included in the emulsion polymerisation process in embodiments of the invention in which the emulsion copolymer latex is prepared by an emulsion polymerisation process having a single monomer emulsion feed stage (with or without a seed stage and with or without the pre-addition of some of the cationic stabilizing surfactant (component E) to the deionised water charged at the outset to the reaction vessel). When a cross-linking monomer (component C) is included in this single feed emulsion polymerisation process, it is preferably included in an amount within the range 0.005% by weight to 0.250% by weight, more preferably within the range 0.020% by weight to 0.200% by weight, most preferably between 0.035% by weight to 0.150% by weight, expressed as a percentage of the total weight of monomer components A + B + C + D.

It is furthermore preferred that an epoxy functional monomer component D is included in the emulsion polymerisation process in embodiments of the invention in which the emulsion copolymer latex is prepared by an emulsion polymerisation process having a single monomer emulsion feed stage (with or without a seed stage and with or without the pre-addition of some of the cationic stabilizing surfactant (component E) to the deionised water charged at the outset to the reaction vessel). When an epoxy functional monomer component D is included within this single feed emulsion polymerisation process, it is included in an amount preferably no greater than 10% by weight, more preferably no greater than 8% by weight, most preferably no greater than 6.5% by weight, as a percentage of the total weight of monomer components A + B + C + D. in some embodiments, it is included in an amount preferably ranging from 0.01% by weight to 10% by weight, more preferably from 0.05% by weight to 8% by weight, most preferably from 0.1% by weight to 6.5% by weight, as a percentage of the total weight of monomer components A + B + C + D.

### Core shell process

In some embodiments of the invention, the cationic copolymer latex emulsion is prepared by a process often referred to as a "core-shell" process. This differs from the processes described above in that two separate monomer emulsions are prepared, these then being fed successively to the reaction vessel at the chosen elevated temperature, concurrently with one or more solutions of free radical initiator(s), component(s) F. The first monomer emulsion feed, when polymerised through the effect of the radical initiator (component F) solution feed, produces dispersed particles of a first copolymer, referred to as the "core". The subsequent second monomer emulsion feed, when polymerised through the effect of the radical initiator (component F) solution feed, produces a second copolymer which typically at least partially encapsulates the particles of the first copolymer, the core. Hence the second copolymer is generally referred to as the "shell". The combination of the second and first copolymers together is generally referred to as a "core-shell" copolymer.

As well known to those skilled in the art, within the core-shell copolymer the core copolymer may have a different glass transition temperature (Tg) from that of the shell copolymer. As is also well known to those skilled in the art, the Tg of the copolymer is determined by both the homopolymer Tgs of the constituent monomers making up the copolymer and the relative proportions of these constituent monomers within the copolymer. This relationship is governed by the well-known Fox Equation. If, for example, the core copolymer is prepared using a preponderance of monomers having high homopolymer Tgs (methyl methacrylate and styrene are good examples of such monomers) then the core copolymer will have a relatively high Tg, say from +5°C to +85°C. If, on the other hand, this copolymer is prepared using a preponderance of monomers having low homopolymer Tgs (butyl acrylate and 2-ethylhexyl acrylate are good examples of such monomers) then the core copolymer will have a relatively low Tg, say from +5°C down to -60°C. The same principle applies to the Tg of the shell copolymer.

The Tg of both the core copolymer and the shell copolymer may be adjusted by varying the relative proportion of higher Tg monomer(s) to lower Tg monomer within either the core stage or the shell stage of the core-shell emulsion polymerisation process, as is well known to those skilled in the art. When adopting a core-shell emulsion polymerisation process to prepare an emulsion copolymer latex for use within the invention, it is preferred to select the higher Tg monomer from styrene and methyl methacrylate and mixtures thereof while selecting the lower Tg monomer from butyl acrylate and 2-ethylhexyl acrylate and mixtures thereof. It is more preferred to select styrene as the higher Tg monomer and butyl acrylate as the lower Tg monomer.

In accordance with the teaching disclosed above, additional monomer components C (one or more cross-linking monomers) and/or D (one or more epoxy functional monomers) may optionally be incorporated into these styrene and alkyl acrylate/methacrylate monomer mixtures in either the core stage or the shell stage.

In embodiments of the invention in which a cross-linking monomer component C is incorporated into the core stage of the process, it is preferably incorporated in an amount ranging from 0.005% by weight to 0.250% by weight, more preferably from 0.020% by weight to 0.200% by weight, most preferably from 0.035% by weight to 0.150% by weight, expressed as a percentage of the total weight of monomer components A + B + C + D of the said core stage. Likewise, if a cross-linking monomer component C is thus incorporated into the shell stage of the process, it is preferably incorporated in an amount ranging from 0.005% by weight to 0.250% by weight, more preferably from 0.020% by weight to 0.200% by weight, most preferably from 0.035% by weight to 0.150% by weight, expressed as a percentage of the total weight of monomer components A + B + C + D of the said shell stage.

Likewise, in embodiments of the invention in which an epoxy functional monomer, component D, is incorporated into the core stage of the core-shell emulsion copolymerisation process, it is preferably incorporated in an amount no greater than 10% by weight, more preferably no greater than 8% by weight, most preferably no greater than 6.5% by weight, as a percentage of the total weight of monomer components A + B + C + D within the said core stage. In some embodiments, it is incorporated in an amount ranging from 0.01% by weight to 10% by weight, more preferably from 0.05% by weight to 8% by weight, most preferably from 0.1% by weight to 6.5% by weight, as a percentage of the total weight of monomer components A + B + C + D within the said core stage.

Likewise, in embodiments of the invention in which an epoxy functional monomer, component D, is incorporated into the shell stage of the core-shell emulsion copolymerisation process, it is preferably incorporated in an amount no greater than 10% by weight, more preferably no greater than 8% by weight, most preferably no greater than 6.5% by weight, as a percentage of the total weight of monomer components A + B + C + D within the said shell stage. In some embodiments, it is incorporated in an amount ranging from 0.01% by weight to 10% by weight, more preferably from 0.05% by weight to 8% by weight, most preferably from 0.1% by weight to 6.5% by weight, as a percentage of the total weight of monomer components A + B + C + D within the said shell stage.

It will be appreciated that, if a core-shell emulsion polymerisation process is adopted for the preparation of an emulsion copolymer latex for use within the practice of the invention, then the total amount of cationic stabilising surfactant (component E) will be divided up between at least the core stage and the shell stage of the process, optionally with some of this surfactant component E being pre-dissolved in the deionised water charged to the reactor at the very start of the process. However the total amount of cationic stabilising surfactant (component E) may be divided up between the different process steps, it remains the case that the total amount of cationic stabilizing surfactant (component E) used within the process lies within the range 0.6% by weight to 3.6% by weight, preferably within the range 1.2% by weight to 3.0% by weight, more preferably within the range 1.6% by weight to 2.4% by weight, expressed as a percentage of the total weight of the emulsion copolymer latex as a whole.

If a core-shell process is used to prepare the emulsion copolymer latex used within the invention, a radical initiator (component F) solution is fed concurrently with both the first monomer emulsion and the second monomer emulsion feeds. In such cases, therefore, the radical initiator component F consists of two components, a core stage radical initiator component F' and a shell stage radical initiator component F". In an embodiment of the invention, a solution of the same radical initiator is fed during both core and shell monomer emulsion feeds, so F' and F" are the same in such embodiments. However, in another embodiment of the invention, the radical initiator component F" fed in solution during the shell stage monomer emulsion feed is different from the radical initiator component F' fed in solution during the core stage monomer emulsion feed. For absolute clarity, in embodiments of the invention in which radical initiator component F', fed during the core stage of the process, and radical initiator component F", fed during the shell stage of the process, have the same chemical composition, the amounts of the solutions of component F' and F", fed during the core stage and shell stage respectively, are not necessarily identical. A different amount of radical initiator solution may be fed during the shell stage compared to the core stage.

In embodiments of the invention in which the emulsion copolymer latex is prepared by an emulsion polymerisation process having two successive monomer emulsion feed stages (with or without a seed stage and with or without the pre-addition of some of the cationic stabilizing surfactant (component E) to the deionised water charged at the outset to the reaction vessel), the so-called "core-shell" process, the one or more non-ionic acrylate ester and/or methacrylate ester monomers (component A) is/are preferably included in an amount ranging from 10% to 90% by weight, more preferably from 20% to 80% by weight, even more preferably from 30% to 70% by weight and most preferably from 35% to 65% by weight, expressed as a percentage of the total weight of the monomer components A + B + C + D in both the core stage and the shell stage totalled together.

In embodiments of the invention in which the emulsion copolymer latex is prepared by an emulsion polymerisation process having two successive monomer emulsion feed stages (with or without a seed stage and with or without the pre-addition of some of the cationic stabilizing surfactant (component E) to the deionised water charged at the outset to the reaction vessel), the so-called "core-shell" process, it is preferred that a styrene monomer and/or one or more non-ionic styrene derivative monomers (component B) is/are included within the emulsion polymerisation process. When a styrene/styrene derivative monomer is included within the core-shell emulsion polymerisation process, it is preferably included in an amount ranging from 10% to 90% by weight, more preferably from 20% to 80% by weight, even more preferably from 30% to 70% by weight and most preferably from 35% to 65% by weight, expressed as a percentage of the total weight of the monomer components A + B + C + D in both the core stage and the shell stage totalled together.

As has been discussed above, the glass transition temperatures (Tgs) of both the core copolymer and the shell copolymer obtained by a core-shell emulsion polymerisation process can be established via the relative proportions of the high Tg monomer(s) (more preferably styrene, a component B) and the low Tg monomer(s) (more preferably butyl acrylate as component A) used in each of the core and shell stages. In embodiments of the invention in which a core-shell emulsion polymerisation process is employed to prepare a core-shell emulsion copolymer latex to be used within the practice of the invention, the glass transition temperature (Tg) of the core copolymer is preferably greater than the glass transition temperature of the shell copolymer. Furthermore, the Tg of the core copolymer preferably lies within the range 10°C to 120°C, more preferably within the range 30°C to 100°C, even more preferably within the range 50°C to 85°C and most preferably within the range 60°C to 75°C, whilst the Tg of the shell copolymer preferably lies within the range -75°C to 10°C, more preferably within the range -65°C to 10°C, even more preferably within the range -55°C to -5°C and most preferably within the range -55°C to -25°C.

Those skilled in the art will appreciate that, in order to prepare a cationic copolymer latex emulsion useful within the practice of the invention, it is possible to employ either:
- an emulsion polymerisation process having one single monomer emulsion feed stage (with or without a seed stage and with or without the pre-addition of some of the cationic stabilizing surfactant (component E) to the deionised water charged at the outset to the reaction vessel), or
- an emulsion polymerisation process having two successive monomer emulsion feed stages (with or without a seed stage and with or without the pre-addition of some of the cationic stabilizing surfactant (component E) to the deionised water charged at the outset to the reaction vessel), the so-called "core-shell" process.

It is also possible to prepare a cationic copolymer latex emulsion useful within the practice of the invention via an emulsion polymerisation process employing three or more successive monomer emulsion feed stages, although this method is not preferred within the practice of the invention. It is preferred within the practice of the invention to employ an emulsion polymerisation process having either one single or two successive ("core-shell") monomer emulsion feed stages to prepare the emulsion copolymer latex.

### Step (b): preparation of the cationic latex modified bitumen

The cationic copolymer latex emulsion resulting from step (a) as disclosed above may then be added to a cationic hydrocarbon binder emulsion.

The cationic hydrocarbon binder emulsion typically comprises:
- hydrocarbon binder;
- a continuous phase, typically an aqueous phase, for example water;
- one or more cationic surfactant(s) and eventually one or more non ionic surfactant;
- one or more acid(s)
- optional additive(s) commonly used in the road field, such as compositions based on plant or petrochemical waxes, adhesion dopes, fatty acid and derivatives, thickeners, viscosifier and fluxing agent.

### Hydrocarbon binder

The term "hydrocarbon binder" or "binder" as used in the present description refers to any hydrocarbon binder of fossil, vegetable or synthetic origin that can be used to produce so-called "bituminous" products. The hydrocarbon binder may be a modified hydrocarbon binder, i.e. a hydrocarbon binder which has been previously modified by the addition of polymers, as described herein below. The hydrocarbon binder may be an additivated hydrocarbon binder, i.e. a hydrocarbon binder to which additives commonly used in the road field have been added (e.g. adhesion promoters, plant or petrochemical waxes).

In some embodiments, the hydrocarbon binder may be bitumen. The bitumen may be pure bitumen, additivated bitumen or modified bitumen, i.e. bitumen modified by the addition of polymer(s).

The polymers that may be used to modify the hydrocarbon binder, in particular bitumen, may be natural or synthetic polymers. Suitable polymers include polymers from the family of elastomer, synthetic or natural, such as:
- statistical, multiblock or star copolymers of styrene and butadiene or isoprene in any proportions (in particular styrene-butadiene-styrene (SBS), styrene-butadiene (SB, SBR for styrene-butadiene rubber), styrene-isoprene-styrene (SIS) block copolymers) or copolymers of the same chemical family (isoprene, natural rubber, etc.), optionally cross-linked in situ,
- copolymers of vinyl acetate and ethylene in any proportion,
- copolymers of ethylene and esters of acrylic acid, methacrylic acid or maleic anhydride, copolymers and terpolymers of ethylene and glycidyl methacrylate, and polyolefins.

In some embodiments, the cationic copolymer latex emulsion resulting from step (a) as disclosed above is added to a cationic hydrocarbon binder emulsion, the cationic hydrocarbon binder emulsion comprising a hydrocarbon binder which is pure (not modified by addition of additives and/or polymers).

In some embodiments, the cationic copolymer latex emulsion resulting from step (a) as disclosed above is added to a cationic hydrocarbon binder emulsion, the cationic hydrocarbon binder emulsion comprising a pre-modified hydrocarbon binder (i.e. hydrocarbon binder previously modified by addition of polymers as described herein above). In some embodiments, the pre-modified hydrocarbon binder is a hydrocarbon binder modified by the addition of SBR or EVA (ethyl vinyl acetate).

The emulsion is a dispersion of the hydrocarbon binder, notably bitumen, in a continuous phase, typically an aqueous phase, for example water.

The cationic hydrocarbon binder emulsion may be prepared by methods well-known to the skilled person. During the manufacture of an emulsion, the hydrocarbon binder is dispersed in fine droplets in the water, for example by mechanical action. The addition of a surfactant forms a protective film around the droplets, preventing them from clumping and allowing the mixture to remain stable and stored for some time. The amount and type of surfactant added to the mixture determines the storage stability of the emulsion and influences the curing time at the time of application.

The hydrocarbon binder can be a soft to hard binder, advantageously of a grade ranging from 20/30 to 160/220.

### Surfactant

The surfactant is advantageously of petroleum, plant, animal origin and mixtures thereof (for example the surfactant can be of plant and petroleum origin).

The surfactant may be an amine. In particular, the amine may be selected from :
- alkylpropylene polyamines;
- fatty amines;
- alkyl diamines;
- amidopolyamines;
- fatty chain quaternary ammoniums;
- and combinations thereof.

In alkylpropylenepolyamines or alkyldiamines, the alkyl group is advantageously a saturated or unsaturated hydrocarbon radical comprising from 8 to 24 carbon atoms, more advantageously 12 to 22 carbon atoms, and/or its immediate derivatives of cyclisation as well as its oxyethylated or oxypropylated derivatives.

The alkylpropylenepolyamines advantageously correspond to formula (II)

R¹⁰-(NR¹⁴-R¹³)ₓ-NR¹¹R¹² (II)

in which :
- x is an integer ranging from 1 to 4. Advantageously x is 1 ;
- R¹⁰ represents a saturated or unsaturated, linear or branched, optionally cyclized hydrocarbon radical comprising from 8 to 24 carbon atoms, more advantageously 12 to 22 carbon atoms. This radical is advantageously derived from tallow fatty acids;
- R¹³ represents a saturated or unsaturated, linear or branched, saturated or unsaturated hydrocarbon radical comprising from 1 to 6 carbon atoms. Advantageously R¹³ represents an ethylene or propylene radical;
- R¹⁴ represents a hydrogen atom, a saturated or unsaturated, linear or branched hydrocarbon radical comprising from 1 to 6 carbon atoms, or a (CH2-CR¹⁵HO)_{z}H radical in which R¹⁵ is a hydrogen atom or a methyl radical, z is 1 or 2. Advantageously R¹⁴ represents a methyl or ethyl radical;
- R¹¹ and R¹² represent, each independently of the other, a hydrogen atom, a saturated or unsaturated, linear or branched hydrocarbon radical comprising from 1 to 6 carbon atoms or a (CH₂-CR¹⁵HO)zH radical in which R¹⁵ is a hydrogen atom or a methyl radical, z is 1 or 2. Advantageously R¹¹ represents a methyl or ethyl radical. Advantageously R¹² represents a methyl or ethyl radical. By way of example, one can quote the tallow trimethylpropylene diamine.

Fatty amines advantageously correspond to formula (III) R¹⁰-NR¹¹R¹²; R¹⁰, R¹¹ and R¹² being as defined above. An example is dimethylamine tallow.

The alkyldiamines advantageously correspond to the formula (IV) NR^{11'}R^{12'}-R10-NR¹¹R¹²; R¹⁰, R¹¹ and R¹² being as previously defined. R^{11'} and R^{12'} each represent, independently of one another, a hydrogen atom, a saturated or unsaturated, linear or branched hydrocarbon radical containing from 1 to 6 carbon atoms or a (CH₂-CR¹⁵HO)_{z}H radical in which R¹⁵ is a hydrogen atom or a methyl radical, z is 1 or 2.

The amidopolyamines advantageously correspond to the formula (V) R^{10'}CO-(NH-R^{10"})a-NH₂, in which :
- R^{10'} is a saturated or unsaturated, linear or branched hydrocarbon residue containing from 12 to 24 carbon atoms, advantageously 16 to 24 carbon atoms. This radical is advantageously derived from tall oil or tallow fatty acids;
- R^{10"} is an ethylene radical;
- a represents an integer ranging from 2 to 5, preferably a is 5;
and/or its immediate cyclization derivatives, in particular imidazoline derivatives.

Amidopolyamine is advantageously the reaction product(s) of a fatty acid such as Tall Oil or tallow with diethanolamine, and/or diethylenetriamine, and/or tetraethylenepentamine and/or triethylenetetramine.

The quaternary ammoniums may in particular be of the formula (VI)

(Rx)ₐN⁺(Ry)_{b}Y⁻ (VI)

in which:
- Rx represents a saturated or unsaturated, linear or branched, optionally cyclized hydrocarbon radical containing from 8 to 24 carbon atoms, more advantageously 12 to 22 carbon atoms;
- Ry represents an alkyl radical comprising from 1 to 6 carbon atoms, optionally hydroxylated, in particular methyl, ethyl, propyl, hydroxyethyl, hydroxypropyl;
- Y⁻ denotes an anion of a mineral acid, in particular a chloride anion, or of an organic acid, in particular an acetate or formate anion;
- b is an integer equal to (4-a) and a can take the values 1, 2 or 3,

In some embodiments, the surfactant may comprise at least one alkylpropylene polyamine and at least one amidopolyamine. In these embodiments, the surfactant may additionally comprise a fatty amine.

Surfactants relevant to this application include the following commercial products:
- Dinoram^{®}S (Arkema) or Redicote^{®}E9 (Nouryon): N alkyl tallow propylene diamine;
- Emulsamine^{®}L 60 (Arkema): Preparation based on tall oil fatty amide, N-(3-dimethylamino)propyl (> 50%) and Emulsamine^{®}LZ (> 25%) with an aromatic hydrocarbon (> 1%) and diethanolamine (> 1%);
- Polyram^{®}S (Arkema): N-alkyl tallow propylene polyamine with Dinoram^{®}S (< 10 %), tallow alkyl amines (Noram^{®}S - < 5 %), tallow nitrile (< 10 %);
- Stabiram^{®}MS 601 (Arkema): solution of N-alkyl tallow N-dimethyl amino propyl N-trimethyl ammonium dichloride (> 50%) in a mixture of water/hexylene glycol (glycol > 20%) with Dinoram^{®}S (< 1%);
- Dinoram^{®}O (Arkema): N-(C16 and C18 unsaturated alkyl) trimethylene diamine (oleic diamine);
- Emulsamine^{®}640 (Arkema): Preparation based on fatty amides of tall oil (>50%), Dinoram^{®}O (>25%) and (Z)-octadec-9-enylamine (>1%);
- lndulin^{®}R 66 (Ingevity): Tallol fatty amides: N - [(dimethylamino)-3-propyl];
- Indulin^{®}R 33 (Ingevity): Tallol fatty amides (N-[(dimethylamino)-3-propyl]) (75-90 %), N-tallow alkyltrimethylenediamine (20-25%);
- Indulin^{®}GE F2 (Ingevity): Nonylphenol ethoxylate (25-35%), alkaline lignin (reaction produced with dimethylamine and formaldehyde) (15-20%), N-(C14-18 and C16-18 unsaturated alkyl)-trimethylenediamine (5-10%);
- IndulinOGE F2 (Ingevity): ethoxylated C12-C14 alcohols (2.5-25%), alkaline lignin (reaction produced with dimethylamine and formaldehyde) (10-20%), N-(C14-18 and C16-18 unsaturated alkyl)-trimethylenediamine (1-3%);
- Duomeen^{®}TTM (Nouryon): suiftrimethylpropylenediamine (90-100%), suifdimethylamine (5-10%);
- Redicote^{®}404 (Nouryon): tallol, reaction products with tetraethylenepentamine (100%)

One or more of these surfactants may be used alone or in mixtures.

The cationic hydrocarbon binder emulsion may also include a non-ionic surfactant. This non ionic surfactant may be chosen from the family of ethoxylated fatty alcohols, the hydrophobic part of the molecule may be of the nonylphenol, octylphenol, cetyl, oleic, etc. type, the hydrophilic part consisting of several ethoxy groups.

### Acid

The continuous phase, typically the aqueous phase, includes a mineral or organic acid (e.g. citric acid, acetic acid), preferably a mineral acid. The acid enables the cationic functions, particularly amines, of the emulsifiers to be ionised to enable them to dissolve in water.

The acid content is adjusted to the surfactant content (depending on the nature of the solid particles, the application temperature...) to have a pH of the aqueous phase between 1.5 and 8, advantageously between 1.5 and 7, more advantageously between 1.5 and 5.5, even more advantageously between 2 and 3.5.

The acid is advantageously hydrochloric acid, phosphoric acid or a polyphosphoric acid. Polyphosphoric acid is a phosphoric acid oligomer comprising molecules according to one or other of the structural formulae PₙO₍₃ₙ₊₁₎H₍ₙ₊₂₎ in which n is an integer greater than or equal to 1, advantageously 1, 2 or 3.

In some embodiments, wherein the cationic bitumen emulsion comprises at least one alkylpropylenepolyamine and at least one amidopolyamine, the acid is advantageously phosphoric acid or a polyphosphoric acid.

### Additives

The emulsion may contain synthetic or natural latex differing from the latex disclosed herein (i.e. differing from the cationic copolymer latex emulsion disclosed herein). Latex means a dispersion of polymers (polyisoprene, SBR, etc,) optionally cross-linked in aqueous phase. This latex is incorporated into the aqueous phase before emulsification or in-line during the manufacture of the emulsion or after manufacture of the emulsion.

The cationic copolymer latex emulsion is preferably added to the cationic hydrocarbon binder emulsion in an amount ranging from 0%to 4% by weight, expressed as a percentage of the total weight of the cationic latex modified hydrocarbon binder emulsion.

The emulsion may also contain a fluxing agent of petroleum or natural origin. These fluxing agents can be added during the manufacture of the emulsion or during the manufacture of bituminous product.

The fluxing agent may be a fluxing agent of petroleum or petrochemical origin. A petroleum fluxing agent is a product resulting from the distillation of crude oil (light fraction(s)), possibly having undergone a hydrotreatment operation. In particular, the fluxing agent is selected from the group consisting of fluxing agents marketed by Total (Greenflux^{®} 2000^{®}, Greenflux SD) or by Exxon (Varsol^{®}).

The fluxing agent is for instance a fluxing agent consisting of dibasic esters. In particular, the fluxing agent is marketed by Solvay (InnRoad Protect^{®}).

The fluxing agent may also be a fluxing agent of natural non-fossil origin (plant or animal origin). A fluxing agent of natural non-fossil origin consists of a natural non-fossil oil, its derivatives such as fatty acid esters and their combinations. These fluxing agents of natural non-fossil origin are well known to the profession.

Vegetable oils such as sunflower, rapeseed, peanut, coconut, linseed, palm, soybean, olive, castor, corn, squash, grape seed, jojoba, sesame, walnut, hazelnut, Chinese wood, tall oil, their derivatives and combinations thereof are preferentially used.

In particular, the fluxing agent of natural non-fossil origin is selected from the group consisting of :
- acids, esters, in particular monoesters including methyl monoesters, or amides, optionally functionalized by oxidation, obtained from vegetable or animal oils (pine, sunflower, rapeseed, linseed, castor, peanut, copra, olive, palm oil), cotton, maize, tallow, lard, palm kernel, soya, pumpkin, grape seed, atgan, jojoba, sesame, walnut, hazelnut, Chinese wood, rice - as described in applications EN 2 786 603, EN 2 910 477, EP 900 822, EN 2 721 043 or EN 2 891 838), and combinations thereof ;
- heavy oils of mineral origin, animal and vegetable oils and fats and their derivatives functionalized with transesterification products and saponification products and combinations thereof, saturated or unsaturated organic mono-, di- or tri-carboxylic acids having from 6 to 24 carbon atoms which may be branched (as described in application AT 406 375) ;
and combinations thereof.

A siccativation additive, such as manganese octoate, may be added to such oils and derivatives to promote oxidation reactions.

### Step (b'): preparation of the cationic latex modified bitumen

Alternatively, the cationic copolymer latex emulsion resulting from step (a) may be added to an emulsifier solution, said emulsifier solution comprising a continuous phase, typically water, one or more cationic surfactant(s), one or more acid(s) and optionally additives. The resulting mixture (i.e. mixture comprising the cationic copolymer latex emulsion and the emulsifier solution) is then added to the hydrocarbon binder. Said resulting mixture is added to the hydrocarbon binder in an amount ranging from 29% to 40% by weight, expressed as a percentage of the total weight of the cationic latex modified hydrocarbon binder emulsion.

The hydrocarbon binder can be a soft to hard binder, advantageously of a grade ranging from 20/30 to 160/220.

In preferred embodiments, the hydrocarbon binder is a bitumen, pure, or modified with a polymer as described above.

The cationic surfactant of the emulsifier solution may be a cationic stabilizing surfactant as disclosed above for component E or a cationic surfactant as described above for the hydrocarbon binder emulsion in step (b).

The emulsion may contain one or more acid as described above for step (b). The one or more acid(s) of the emulsifier solution is notably selected from phosphoric acid, hydrochloric acid, acetic acid, sulfuric acid, their derivatives and combinations thereof.

The additive is chosen among additives commonly used in the road field, such as compositions based on plant or petrochemical waxes, adhesion dopes, fatty acid and derivatives, thickeners, viscosifier and fluxing agent. In particular, the fluxing agent is as described above for step (b).

The present invention also relates to a cationic latex modified hydrocarbon binder emulsion comprising bitumen, one or more cationic surfactants and a cationic copolymer latex emulsion as disclosed herein, i.e. a cationic copolymer latex emulsion prepared by emulsion polymerisation of polymerizable monomers, said polymerizable monomers comprising:
A- one or more non-ionic acrylate ester and/or methacrylate ester monomers;
B- optionally styrene monomers and/or one or more non-ionic styrene derivative monomers;
C- optionally one or more cross-linking monomers having two or more ethylenically unsaturated (C=C) double bonds susceptible to free radical copolymerisation;
D- optionally one or more epoxy functional monomers having one C=C double bond susceptible to free radical copolymerisation and one epoxide functional group;

wherein said polymerizable monomers do not comprise any aliphatic conjugated diene monomers,
in presence of a cationic stabilizing surfactant.

The cationic latex modified hydrocarbon binder emulsion is suitably prepared by the process herein disclosed. The bitumen, one or more cationic surfactants, components A, B, C and D and cationic stabilizing surfactant are as disclosed herein above.

### Bituminous products

The cationic latex modified hydrocarbon binder emulsions of the present invention, in particular cationic latex modified bitumen emulsions, may be used to prepare a variety of bituminous products, such as surface dressings, bituminous concrete emulsions (cold mixes), microsurfacings and slurry seals, fog seals, cape seals and tack coats.

Thus, the present invention is also directed to bituminous products, such as described herein, prepared with the use of the cationic latex modified bitumen emulsions of the present invention and to a method for their preparation.

The method of preparation of a bituminous product comprises the step of contacting solid particles with a cationic latex modified hydrocarbon binder emulsion, notably a cationic latex modified bitumen emulsion, as described herein.

### Solid particles:

The term "solid particles" as used herein means any solid particles that can be used for the production of bituminous products, in particular for road construction. Examples of solid particles include mineral solid particles, such as natural mineral aggregates (gravel, sand, fines), that may come from quarries or gravel pits, recycling products such as asphalt aggregates that may result from the recycling of materials recovered during road repairs and coating plant surpluses, manufacturing scrap, shingles (from recycling of roofing membranes), aggregates from recycling of road materials including concrete, slag, shale in particular bauxite or corundum, rubber powder from recycling of tyres in particular, artificial aggregates of any origin and coming for example from municipal solid waste incineration fly ash, as well as their mixtures in any proportion.

Solid particles, in particular solid mineral particles, such as natural mineral aggregates, include:
- elements smaller than 0.063 mm (filler or fines)
- sand with elements between 0.063 mm and 2 mm;
- chippings, the elements of which have dimensions
   - between 2 mm and 6 mm;
   - greater than 6 mm;

The size of solid particles, in particular of mineral solid particles, such as aggregates, is measured by the tests described in NF EN 933-2 (May 1996 version).

"Asphalt aggregates" means asphalt mixes (a mixture of aggregates and bituminous binders) resulting from the milling of asphalt layers, the crushing of slabs extracted from pavements into asphalt mixes, pieces of asphalt slabs, asphalt waste or surplus asphalt production (surplus production is asphalt or partially asphalt materials in plant resulting from the transitional phases of manufacture). These elements and other recycling products can reach dimensions up to 31.5 mm.

"Solid mineral particles" are also referred to as "mineral fraction 0/D". This mineral fraction 0/D can be separated into two grain sizes: the mineral fraction 0/d and the mineral fraction d/D.

The finest elements (the mineral fraction 0/d) will be those in the range between 0 and a maximum diameter that can be set between 2 and 6 mm (from 0/2 to 0/6), advantageously between 2 and 4 mm. The remaining elements (minimum diameter greater than 2, 3, 4, 5 or 6mm; and approximately up to 31.5mm) make up the mineral fraction d/D.

### Bituminous products:

The bituminous product may be any bituminous products known to the skilled person. It may be
- surface dressings;
- emulsion asphalt concretes or bituminous concrete emulsions (BCE) (cold mixes);
- slurry seals and microsurfacings;
- cape seals;
- fog seals; or
- tack coats.

The bituminous products can contain high contents (ranging from 0% to 100% by weight, advantageously from 20% to 50% by weight, based on the total weight) of recycling products (asphalt product aggregates, asphalt aggregates).

Bituminous products prepared with the cationic latex modified hydrocarbon binder emulsions of the present invention may show an improvement of the cohesion build-up. For instance, the cohesion build-up of microsurfacing prepared with the cationic latex modified hydrocarbon binder emulsions from the present invention, notably cationic latex modified bitumen emulsions, was improved compared to bitumen emulsions modified with SBR latex obtained by charge inversion of an anionic SBR latex.

### Surface dressing

Surface dressing, in the sense of the present description, means a layer consisting of superimposed layers of a hydrocarbon binder and solid particles, in particular solid mineral particles. It may be obtained by pulverizing a cationic latex modified hydrocarbon binder emulsion onto a substrate or solid particles, and then spreading solid particles in one or more layers over the emulsion. The whole is then compacted. A surface dressing requires not only a binder that is fluid enough to be sprayed, but also a binder that allows the solid particles to adhere well to the substrate. Once sprayed, the binder must wet the solid particles and must harden quickly to also meet the criterion of increased cohesion.

The rheological properties of the stabilised binder obtained from the hydrocarbon binder cationic emulsion may be determined by the MSCR (Multiple Strain Creep and Recovery)Test (NF EN 16659).

It was discovered that the cationic copolymer latex emulsion herein disclosed made it possible to effectively improve the rheological properties of the binder without penalizing the affinity between binder and solid particles.

The solid particles, typically solid mineral particles, used in a surface dressing advantageously belong to the following granular classes (d/D): 4/6.3, 6.3/10, 10/14.

The total content of cationic latex modified hydrocarbon binder emulsion in a dressing will be adapted according to the structure of the dressing (single or two-layer, type of gravel) and the size of the aggregates, following for example the recommendations of the document "Wearing courses - Technical guide, May 1995".

Cationic latex modified hydrocarbon binder emulsions used for surface dressing typically comprise, based on the total weight of the cationic latex modified hydrocarbon binder emulsion, from 1% to 20% by weight, more advantageously 1 to 5% by weight of the cationic copolymer latex emulsion as disclosed herein.

Surface dressings are typically applied at a temperature less than or equal to 90°C, for example from 40°C to 80°C or from 50°C to 70°C.

### Bituminous concrete emulsion (BCE):

Bituminous concrete emulsions, also called asphalt emulsions, are hydrocarbon asphalt mixes made cold from aggregates and a hydrocarbon binder emulsion. The aggregates can be used without prior drying and heating or can be partially pre-coated with hot hydrocarbon binder. It may sometimes be necessary to reheat the product after manufacture, during processing.

This technique, known as the "cold" technique, has the important environmental advantage of not producing fumes, which reduces the nuisance for workers and local residents. Bituminous concrete emulsions consist of a mixture of solid particles, typically solid mineral particles, including aggregates, bitumen emulsion (optionally modified), and additives.

However, the quality of the dressing can be poor, with the observation of a stripping phenomenon: poor distribution of the bitumen film over the entire granular fraction. The more fines there are in the granular fraction, the worse the distribution of the binder on the granular fraction (mainly on the larger elements) will be.

To remedy or limit these problems of loss of compactability and poor distribution of the bitumen film over the entire granular fraction, the step of mixing the granular fractions and the binder, optionally the fluxing agent, can be sequenced as described for instance in EP 0 384 094, EP 0 781 887, EP 0 552 574, FR 2 732 239 and EP 1 668 184.

In an embodiment adapted to bituminous concretes, the cationic copolymer latex emulsion is introduced into the composition comprising the hydrocarbon binder cationic emulsion, then said composition is brought into contact with solid mineral particles (variant 1).

In another embodiment adapted to bituminous concretes, the cationic copolymer latex emulsion is introduced at least partly at the same time as the solid mineral particles with a composition comprising the hydrocarbon binder cationic emulsion (variant 2). In another embodiment adapted to bituminous concretes, part or all of the cationic copolymer latex emulsion is introduced into a premix based on hydrocarbon binder cationic emulsion and solid mineral particles (variant 3).

The solid particles, typically solid mineral particles, for bituminous concrete emulsions include advantageously:
- elements smaller than 0.063 mm (filler or fines)
- sand with elements between 0.063 mm and 2 mm;
- chippings, the elements of which have dimensions ranging from 2 mm to 6, 10 or 14mm.

The hydrocarbon binder used for the synthesis of bituminous concrete emulsions is in the form of a hydrocarbon binder cationic emulsion. The total cationic latex modified hydrocarbon binder emulsion in said bituminous concrete emulsions is typically 1,5 to 12,5% by weight, advantageously 4,5 to 10,5% by weight, more advantageously 5 to 8,5% by weight, based on the weight of the solid mineral particles. This cationic latex modified hydrocarbon binder emulsion content corresponds to the amount of emulsion introduced as such and does not include the amount of binder recovered from the asphalt aggregates forming part of the solid mineral fraction.

The cationic latex modified hydrocarbon binder emulsion used for making a bituminous concrete emulsion advantageously comprises, based on the total weight of the cationic latex modified hydrocarbon binder emulsion, 0,5 to 20% by weight of the cationic copolymer latex emulsion, more advantageously 1 to 10% by weight, even more advantageously 2 to 5% by weight. These contents are calculated whether the cationic copolymer latex emulsion is actually added to the hydrocarbon binder before being brought into contact with solid mineral particles or whether it is added to the composition comprising the hydrocarbon binder cationic emulsions and the solid particles.

### Microsurfacing and slurry seal:

Microsurfacing and slurry seal are surface layer asphalts consisting of undried aggregates coated with hydrocarbon binder cationic emulsion and continuously poured in place by means of specific equipment. After application and breaking of the emulsion, this very thin cold-mix dressing (generally 6 to 13 mm thick per layer) must reach its final consistency (increase in cohesion) very quickly. The two essential parameters governing the formulation, manufacture and application of microsurfacing and slurry seal materials are:
- the workability of the aggregate/emulsion mixture: optimization of the proportions of the different constituents (water, additives, emulsion formulation) to obtain a sufficient lead time and thus allow the mixing of the aggregates with the emulsion in the mixer.
- the kinetics of "increase in cohesion": the microsurfacing material, after application on the pavement, must acquire an increase in cohesion as quickly as possible for opening to traffic. For curing temperature ranging from 7 to 40°C, a 30-minute delay is considered relevant for the person skilled in the art to meet the strictest specifications.

It was discovered that the cationic copolymer latex emulsion disclosed herein made it possible to modify cationic bitumen emulsions for microsurfacing. In particular, the cationic copolymer latex emulsion disclosed herein improves the cohesion kinetics of the microsurfacing.

For a microsurfacing material, the initially separated hydrocarbon binder droplets give the system a fluid character and make it easy to place using the specific machines for coldmix bituminous materials. The system is then viscous. The characteristic time during which this state lasts is called the handling time. In a second step, the hydrocarbon binder droplets gradually coalesce. When all the hydrocarbon binder droplets are pooled, the emulsion is considered to have broken (break time). The system is then viscoelastic. The system then tends to contract so as to reduce the contact surface between the water and the binder (cohesion time). This process follows a kinetics which will depend on the electrostatic repulsions between droplets and therefore on the nature of the hydrocarbon binder and the emulsifier. The kinetics of the coalescence reaction between the hydrocarbon binder droplets will condition the speed of the increase in cohesion of the microsurfacing, which may or may not result in the material's sensitivity to the curing conditions at a young age.

The cationic copolymer latex emulsion disclosed herein facilitates the cohesion build-up of the microsurfacing material compare to conventional charge inversed SBR latex.

The solid particles, typically solid mineral particles, used for microsurfacing and slurry seal include advantageously:
- elements smaller than 0.063 mm (filler or fines)
- sand with elements between 0.063 mm and 2 mm;
- chippings, the elements of which have dimensions ranging from 2 mm to 6, 8 or 10 mm.

A mineral additive can be added to solid particles to regulate the pH rise kinetics during mixing and improve the workability time and then improve the breaking quality of the emulsion and improve the adhesion properties. This additive can be cement, lime, calcium milk of lime, calco-magnesium milk.

"Cement" means any hydraulic binder composed of finely ground inorganic material which, when mixed with water, forms a paste which sets and hardens as a result of reactions and hydration processes and which, after hardening, retains its strength and stability even under water (standards NF P98-149 (2000-06-01)).

"Calco-magnesian milk" means an aqueous suspension of solid particles of a calco-magnesian compound. Calco-magnesium milks are more broadly defined in application WO 2016/005591.

The mineral additive content advantageously ranges from 0.05 to 1 ppc, by weight relative to the weight of the solid particles, in particular the dry mineral solid particles.

Fibres, advantageously organic fibres and in particular polyacrylonitriles, such as polyacrylonitrile fibres with a size between 4 and 12 mm, can also be added to the solid fraction. The fibre content advantageously ranges from 0.05 to 0.5 ppc (part per cent by weight) / dry solid particles, preferably between 0.07 and 0.2 ppc.

The hydrocarbon binder used for the manufacture of microsurfacing or slurry seal is in the form of a cationic latex modified hydrocarbon binder emulsion. In this emulsion, the hydrocarbon binder content advantageously varies from 50 to 75% by weight of binder, based on the total weight of the emulsion, more advantageously from 55 to 70% by weight, even more advantageously from 60 to 65% by weight.

The total cationic latex modified hydrocarbon binder emulsion in said bituminous concrete emulsions is typically 1,5 to 12,5% by weight, advantageously 4,5 to 10,5% by weight, more advantageously 5 to 8,5% by weight, based on the weight of the solid particles.

The cationic latex modified hydrocarbon binder emulsion used for making a bituminous concrete emulsion advantageously comprises, based on the total weight of the cationic latex modified hydrocarbon binder emulsion, 0,5 to 20% by weight of said cationic copolymer latex emulsion, more advantageously 1 to 10% by weight, even more advantageously 2 to 5% by weight.

### Fog seal and tack coat:

Fog seal and tack coat, in the sense of the present description, means a layer consisting of a hydrocarbon binder. It is typically obtained by pulverizing a hydrocarbon binder cationic emulsion and then eventually spreading solid mineral particles (filler and/or sand) in one layer over this binder. A tack coat requires not only a binder that is fluid enough to be sprayed, but also a binder that allows the upper layer applied after the tack coat to adhere well to the substrate. Once sprayed, the binder must wet the substrate and must harden quickly to also meet the criterion of increased cohesion and short time to reopen the job site to allow the upper layer to be poured onto the tack coat.

The rheological properties of the stabilised binder obtained from the hydrocarbon binder cationic emulsion may be determined by the MSCR (Multiple Strain Creep and Recovery)Test (NF EN 16659).

It was discovered that the cationic copolymer latex emulsion as disclosed herein improves the rheological properties of the binder.

The cationic copolymer latex emulsion as disclosed herein are advantageously added to the hydrocarbon binder cationic emulsion, then the cationic latex modified hydrocarbon binder emulsion is sprayed onto the substrate.

The solid particles, typically solid mineral particles, eventually used in a fog seal advantageously belong to the 0/2 granular class (d/D).

The total content of hydrocarbon binder cationic emulsion in a tack coat or a fog seal will be adapted according to the structure of the substrate and the nature of the binder.

The hydrocarbon binder cationic emulsion used in the manufacture of a tack coat or a fog seal may be pure bitumen or polymer-modified bitumen, as described above.

Cationic latex modified hydrocarbon binder emulsions used for fog seal and tack coat typically comprise, based on the total weight of the cationic latex modified hydrocarbon binder emulsion, from 1% to 20% by weight, more advantageously 1 to 5% by weight of the cationic copolymer latex emulsion as disclosed herein.

Fog seal and tack coat are typically applied at a temperature less than or equal to 90°C, for example from 40°C to 80°C or from 50°C to 70°C.

### EXAMPLES

### Preparations of cationic copolymer latex emulsions

Five cationic copolymer latex emulsions were first prepared, four being prepared directly by emulsion polymerization using a cationic stabilizing surfactant and the fifth being prepared by charge inversion of an anionic stabilized emulsion copolymer latex using a process known within the art.

Latex Example L1 was prepared by an emulsion polymerization process typical of the art, using 30.9% by weight of butyl acrylate, 17.5% by weight of styrene and 2.16% by weight of cetyltrimethylammonium chloride (cationic stabilizer surfactant), all weight percentages being expressed as percentages of the emulsion copolymer latex as a whole. This latex had a total solids content (1hr at 150°C) of 49.2%, a pH of 1.7, a Brookfield viscosity (spindle 2 speed 20rpm) of 0.56 dPa.s and a mean particle size (by Mastersizer instrumentation of Malvern Panalytical Ltd., Malvern, Worcestershire, UK) of 126nm. The copolymer had a glass transition temperature (Tg) of -10°C.

Latex Example L2 was prepared by a core-shell emulsion polymerization process typical of the art, again using 2.16% by weight of cetyltrimethylammonium chloride (cationic stabilizer surfactant) in total. The core stage was prepared with 2.5% by weight of butyl acrylate, 9.6% by weight of styrene, giving a Tg of 60°C. The shell stage was prepared with 29.2% by weight of butyl acrylate and 7.1% by weight of styrene, giving a Tg of - 30°C, all weight percentages being expressed as percentages of the emulsion copolymer latex as a whole. This latex had a total solids content of 48.9%, a pH of 1.6, a Brookfield viscosity (spindle 2 speed 20rpm) of 0.50 dPa.s and a mean particle size of 122nm.

Latex Example L3 was prepared by an emulsion polymerization process typical of the art, using 48.4% by weight of butyl acrylate, 0.06% by weight of allyl methacrylate (cross-linker) and 1.88% by weight of cetyltrimethylammonium chloride (cationic stabilizer surfactant), all weight percentages being expressed as percentages of the emulsion copolymer latex as a whole. This latex had a total solids content of 50.3%, a pH of 1.7, a Brookfield viscosity (spindle 2 speed 20rpm) of 4.62 dPa.s and a mean particle size of 116nm. The copolymer had a Tg of -53°C.

Latex Example L4 was prepared by an emulsion polymerization process typical of the art, using 48.4% by weight of butyl acrylate and 1.88% by weight of cetyltrimethylammonium chloride (cationic stabilizer surfactant), all weight percentages being expressed as percentages of the emulsion copolymer latex as a whole. This latex had a total solids content of 49.3%, a pH of 1.5, a Brookfield viscosity (spindle 2 speed 20rpm) of 0.60 dPa.s and a mean particle size of 133nm. The copolymer had a Tg of -53°C.

Latex Example L5 was prepared by a two stage process, the first stage being the preparation, by an emulsion polymerization process typical of the art, of a latex using 48.1% by weight of butyl acrylate and 0.75% by weight of sodium lauryl sulphate as *anionic* stabilizing surfactant, all weight percentages being expressed as percentages of this first stage emulsion copolymer latex as a whole. This first stage latex had a total solids content of 49.7%, a pH of 1.4, a Brookfield viscosity (spindle 2 speed 20rpm) of 0.44 dPa.s and a mean particle size of 185nm. The copolymer had a Tg of -53°C. This first stage latex was then charged inversed in a second stage, using Ethomeen T25 (Nouryon) as a steric stabilizer and Redicote E11 (Nouryon) as a cationic surfactant as described in patent no. US 5 045 576, to give the final Latex Example L5.

### Example 1 : Surface dressing bitumen emulsions modified with latex

Five cationic bitumen emulsions have been manufactured using the same emulsifiers (nature and content) and process.

R1 is a reference emulsion without latex addition. R2 is a reference emulsion modified with a cationic SBR latex obtained by charge inversion. F1, F2 and F3 are cationic latex modified bitumen emulsion from the present invention.

| | | R1 | R2 | F1 | F2 | F3 |
|---|---|---|---|---|---|---|
| Bitumen phase (dosage : 700kg/t*) | | | | | | |
| Aqueous phase (dosage : 300kg/t*) | | | | | | |
| Surfactant | Nature | Dinoram^{®} S | Dinoram^{®} S | Dinoram^{®} S | Dinoram^{®} S | Dinoram^{®} S |
| | Supplier | Arkema | Arkema | Arkema | Arkema | Arkema |
| | Dosage (kg/t*) | 1,3 | 1,3 | 1,3 | 1,3 | 1,3 |
| Acid | Nature | HCl | HCl | HCl | HCl | HCl |
| | Dosage (kg/t*) | 1,1 | 1,1 | 1,1 | 1,1 | 1,1 |
| Latex | Nature | / | Valoflex C1 | L1 | L2 | L3 |
| | Supplier | / | Valochem | Scott Bader | Scott Bader | Scott Bader |
| | Dosage (kg/t*) | / | 40 | 54 | 54 | 53 |
| Water | Dosage (kg/t*) | 297,6 | 297,6 | 297,6 | 297,6 | 297,6 |

| | | | | | | |
|---|---|---|---|---|---|---|
| * kg per ton of emulsion (emulsion = bitumen phase + aqueous phase) | | | | | | |

| | R1 | R2 | F1 | F2 | F3 |
|---|---|---|---|---|---|
| *pH: NF EN 12850* | | | | | |
| pH of emulsion | 2,5 | 3,1 | 2,4 | 2,4 | 3,03 |

| *Sieve residue: NF EN 1429* | | | | | |
|---|---|---|---|---|---|
| Residue at 0,500 mm (%) | 0,00 | 0,01 | 0,01 | 0,04 | 0,01 |
| Residue at 0,160 mm (%) | 0,02 | 0,10 | 0,04 | 0,04 | 0,10 |

| *Laser Granulometry (Malvern)* | | | | | |
|---|---|---|---|---|---|
| Median diameter (µm) | 7,2 | 9 | 8,3 | 7,5 | 7,2 |
| Standard deviation | 0,3 | 0,3 | 0,3 | 0,3 | 0,3 |

| *Efflux time: NF EN 12846* | | | | | |
|---|---|---|---|---|---|
| STV 4 mm at 40°C (s) | 15 | 7,5 | 9 | 13 | 9 |
| STV 2 mm at 40°C (s) | 224 | 71 | 114 | 140 | 95 |

| *breaking index: NF EN 13075-1* | | | | | |
|---|---|---|---|---|---|
| Caolin Q92 | 91 | 106 | 68 | 63 | 88 |
| Forshammer | 109 | 127 | 81 | 75 | 105 |

The characterization of the emulsions F1, F2 and F3 displays results within the requirements of the NF EN 13808 standard. The emulsions have then been subjected to the forced air flow stabilization protocol in order to measure the rheological properties of the binders by MSCRT and strain sweep tests.

| | R2 | F1 | F2 | F3 |
|---|---|---|---|---|
| MSCRT at 52°C / % of recovery | | | | |
| % recovery / 0,1 kPa | 18,8 | 47,1 | 41,2 | 46,6 |
| % recovery / 3,2 kPa | 7,5 | 10,6 | 10,3 | 8,8 |

| MSCRT at 52°C / Creep compliance Jₙᵣ | | | | |
|---|---|---|---|---|
| Jₙᵣ / 0,1 kPa | 0,99 | 0,94 | 0,82 | 0,68 |
| Jₙᵣ / 3,2 kPa | 1,3 | 4,7 | 1,6 | 1,5 |

| Strain sweep at 15°C (See chart 3) | | | | |
|---|---|---|---|---|
| G* (MPa) at 5% of strain | 3,37 | 4,00 | 4,27 | 3,50 |
| G* (MPa) at 10% of strain | 2,61 | 3,18 | 3,18 | 2,72 |
| G* (MPa) at 20% of strain | 1,73 | 1,87 | 1,51 | 1,68 |

Both rheological tests showed good performances of the latexes from the present invention.

### Example 2: Microsurfacing bitumen emulsions modified with latex

Five cationic bitumen emulsions have been manufactured using the same emulsifiers (nature and content) and process.

R3 is a reference emulsion without latex addition. R4 is a reference emulsion modified with a cationic SBR latex obtained by charge inversion. R5 is a reference emulsion modified with a non-ionic styrene-acrylate latex commercialized by BASF as Acronal^{®} NX 4627X. This emulsion has been investigated in order to demonstrate the limitations of non-ionic surfactants comprised in the latex on cohesion build-up of the microsurfacing material. R6 is a reference emulsion modified with a charge inversed anionic styrene-acrylate latex as described in patent no. US 5 045 576.

F4 is a cationic latex modified bitumen emulsion of the present invention.

| | | R3 | R4 | R5 | R6 | F4 |
|---|---|---|---|---|---|---|
| *Bitumen phase (dosage : 600kg*/*t)* | | | | | | |
| Bitumen additive | Nature | Indulin FD¹ | Indulin FD¹ | Indulin FD¹ | Indulin FD¹ | Indulin FD¹ |
| | Supplier | Ingevity | Ingevity | Ingevity | Ingevity | Ingevity |
| | Dosage (in wt% of bitumen phase) | 0,60 | 0,60 | 0,60 | 0,60 | 0,60 |

| *Aqueous phase (dosage : 400kg*/*t)* | | | | | | |
|---|---|---|---|---|---|---|
| Surfactant | Nature | Redicote^{®} C320E | Redicote^{®} C320E | Redicote^{®} C320E | Redicote^{®} C320E | Redicote^{®} C320E |
| | Supplier | Nouryon | Nouryon | Nouryon | Nouryon | Nouryon |
| | Dosage (kg/t*) | 7 | 7 | 7 | 7 | 7 |
| Acid | Nature | H₃PO₄ | H₃PO₄ | H₃PO₄ | H₃PO₄ | H₃PO₄ |
| | Dosage (kg/t*) | 7 | 7 | 7 | 7 | 7 |
| Latex | Nature | / | Valoflex C1 | Acronal^{®} NX 4627X | L5 | L4 |
| | Supplier | / | Valochem | BASF | Scott Bader | Scott Bader |
| | Dosage (kg/t*) | 0 | 20 | 27,2 | 27,2 | 27,2 |
| Water | Dosage (kg/t*) | 386 | 386 | 386 | 386 | 386 |

| | | | | | | |
|---|---|---|---|---|---|---|
| *¹ Indulin FD : fatty acid* of *tall oil comprising a mixture* of *C18:0, C18:1 and C18:2 fatty acids.* * kg per ton of emulsion (emulsion=bitumen phase + aqueous phase) | | | | | | |

The emulsions have been characterized.

| | R3 | R4 | R5 | R6 | F4 |
|---|---|---|---|---|---|
| *pH : NF EN 12850* | | | | | |
| pH emulsion | 2,2 | 2,3 | 2,6 | 2,2 | 2,2 |

| *Efflux time viscosity : NF EN 12846-1* | | | | | |
|---|---|---|---|---|---|
| STV4 mm à 40°C, s | 7 | 5 | 5 | 5 | 6 |
| STV2 mm à 40°C, s | 32 | 28 | 30 | 32 | 33 |

| *Sieve residue : NF EN 1429* | | | | | |
|---|---|---|---|---|---|
| Residue at 0,500 mm (%) | 0,02 | 0,01 | 0,05 | 0,01 | 0,04 |
| Residue at 0,160 mm (%) | 0,05 | 0,06 | 0,08 | 0,05 | 0,05 |

| *Laser Granulometry (Malvern)* | | | | | |
|---|---|---|---|---|---|
| Median diameter (µm) | 3,18 | 3,22 | 4,40 | 3,40 | 4,15 |
| Standard deviation | 0,3 | 0,3 | 0,2 | 0,3 | 0,2 |

| *breaking index : NF EN 13075-1* | | | | | |
|---|---|---|---|---|---|
| Forshammer | 242 | 233 | 294 | 264 | 282 |

All properties of the emulsions are within the requirements.

Microsurfacing mix design trials have been carried out using 0/6 aggregates from Mazières quarry.

### Workability time

In order to evaluate the workability time of the microsurfacing materials, laboratory tests are carried out in a container on batches of 400 g to 1000 g of dry material. After mixing the constituents, the change in state of the microsurfacing material (from liquid to pasty) is assessed by manually stirring with a spatula at constant speed. The observed change of state gives the setting time.

This test is carried out at a controlled temperature (classically between 20 and 25 °C). The requirements are a setting time of more than 30 s, advantageously more than 40 s, more advantageously more than 90 s, even more advantageously between 90 and 180 s, even more advantageously between 90 and 120 s.

### Breaking time

Using the cohesion apparatus (NF EN 12274-4), a blotting paper, subjected to a pressure of 0.2 MPa, is applied to the surface of a wafer of the microsurfacing material to determine the time after which the paper is no longer stained by the emulsion. This time defines the breaking time of the emulsion.

In the context of the present invention, the breaking time is advantageously less than 20 min.

### Fracture test

This test was developed to evaluate the tensile and torsional fracture strength of microsurfacing materials. Specimens of microsurfacing material of size 120*120*10 mm are manufactured after checking the setting time. After a time of 30 minutes at 18°C-20°C, 55% humidity, the microsurfacing material is demoulded and positioned on the machine with a counterweight placed on its fixed part (usually half of the asphalt is placed in a vacuum). The time taken for the asphalt to break after the trapdoor has been opened is then measured. The result is given in seconds and represents the fracture time. The longer the time, the greater the flexural strength of the microsurfacing material and therefore the greater the increase in cohesion.

The rise in cohesion is considered to be good if under standard conditions of conservation (30 min at 18°C-20°C, 55% humidity) the time at the end of which the fracture occurs is more than 10 s, advantageously more than 15 s. Depending on the granular fraction, fracture times of the order of 50 s or 70 s can be obtained. Moreover, the fracture test can be severe (30min at 10°C, 55% humidity) in order to accentuate the differences between formulas.

### WTAT (Wet track abrasion test): wear resistance test

This test consists in carrying out the wear test as described in standard NF EN 12274-5 (2018-03-14) after more severe curing conditions in order to qualify the mechanical performance of the microsurfacing material when it is put under traffic.

The test is carried out for 18 h at 100% humidity and 18°C: these are unfavourable curing conditions, simulation of curing in wet weather.

After these curing processes, the specimens are immersed in water for 1 hour before being abraded under water for 5 minutes at room temperature.

The purpose of this test is to evaluate the influence of curing conditions (temperature, hygrometry) on the mechanical properties at young age of a microsurfacing material.

A percentage of mass loss (in relation to the abraded zone) is specified according to the curing conditions: - < 25% loss at 100% humidity at 18°C.

Microsurfacing materials are prepared by mixing 0/6 aggregates from Mazieres quarry with the reference emulsions R3, R4, R5 or R6 or with the emulsion according to the invention F6, each at 11.3pph, with cement at 0.5pph and with water at 8 pph, expressed in pph of dried aggregates. The water content includes water comprised in aggregates and input water.

Results of the mechanical properties of these microsurfacing materials are summarized in the Table below.

| Emulsion Reference | R3 | R4 | R5 | R6 | F4 |
|---|---|---|---|---|---|
| Water content (pph) | 8 | 8 | 8 | 8 | 8 |
| Emulsion content (pph) | 11,3 | 11,3 | 11,3 | 11,3 | 11,3 |
| Cement CEM II 32,5 (pph) | 0,5 | 0,5 | 0,5 | 0,5 | 0,5 |
| Workability time (s) | 90 | 140 | 130 | 90 | 120 |
| Breaking time (min) | 4 | 7 | 6 | 5 | 6 |
| Fracture time (s) | 53 | 15 | 12 | 2 | 27 |
| WTAT 18°C 100% RH (%) | 7 | 0 | 79 | 2 | 0 |

The results of the mix design investigations show that latex addition, whatever the latex nature, as a negative influence on the cohesion build-up as characterized by the fracture time. The three reference emulsions prepared with latex (R4, R5 and R6) show lower fracture time values compared to F4 emulsion which has been prepared with the latex from the invention. These results demonstrate that emulsifiers nature and content used during the emulsion polymerisation of the latex of the present invention are appropriate to the microsurfacing technique requirements. Neither charged inversed latexes (SBR or styrene-acrylate) or non-ionic stabilized latex allow good cohesion build-up of the microsurfacing material.

## Claims

1. A process for preparing a cationic latex modified hydrocarbon binder emulsion comprising the steps of:
(a) preparing a cationic copolymer latex emulsion by an emulsion polymerisation of polymerizable monomers, said polymerizable monomers comprising
A- one or more non-ionic acrylate ester and/or methacrylate ester monomer(s), and
B- optionally styrene monomer and/or one or more non-ionic styrene derivative monomer(s),
C- optionally one or more cross-linking monomer(s) having two or more ethylenically unsaturated (C=C) double bonds susceptible to free radical copolymerisation,
D- optionally one or more epoxy functional monomer(s) having one C=C double bond susceptible to free radical copolymerisation and one epoxide functional group,
wherein said polymerizable monomers do not comprise any aliphatic conjugated diene monomer,
in presence of a cationic stabilizing surfactant, and
(b) adding the cationic copolymer latex emulsion resulting from step (a) to a cationic hydrocarbon binder emulsion, or
(b') adding the cationic copolymer latex emulsion resulting from step (a) to an emulsifier solution, said emulsifier solution comprising water, one or more cationic surfactant(s), one or more acid(s) and optionally additives to provide a mixture, and adding the resulting mixture to hydrocarbon binder;
to form a cationic latex modified hydrocarbon binder emulsion.

2. The process according to claim 1, wherein the one or more non-ionic acrylate ester and/or methacrylate ester monomer(s) is(are) selected from the group consisting of C₁-C₈ alkyl acrylate and C₁-C₈ alkyl methacrylate esters, preferably from the group consisting of methyl methacrylate, n-butyl acrylate, 2-ethylhexyl acrylate and mixtures thereof, more preferably n-butyl acrylate.

3. The process according to claim 1 or 2, wherein the polymerizable monomers comprise styrene monomer and/or one or more non-ionic styrene derivative monomer(s), said styrene monomer and/or one or more non-ionic styrene derivative monomer(s) being selected from the group consisting of styrene, alpha-methyl styrene, vinyl toluene and mixtures thereof, preferably styrene.

4. The process according to any of the preceding claims, wherein the polymerizable monomers comprise one or more cross-linking monomer(s) having two or more ethylenically unsaturated (C=C) double bonds susceptible to free radical copolymerisation, said cross-linking monomer(s) being selected from the group consisting of methylene-bis-acrylamide, divinylbenzene, allyl acrylate, allyl methacrylate, ethylene glycol diacrylate or dimethacrylate, di-or-polyacrylates of di-or-polyfunctional alcohols, di-or-polymethacrylates of di-or-polyfunctional alcohols, wherein said di-or-polyfunctional alcohols may be chosen from 1,3-butanediol, 1,4-butanediol, 1,6-hexanediol, diethylene glycol, triethylene glycol, dipropylene glycol, tripropylene glycol, trimethylolpropane, ethoxylated/propoxylated trimethylolpropane, glycerol, ethoxylated/propoxylated glycerol, pentaerythritol or ethoxylated/propoxylated pentaerythritol.

5. The process according to any of the preceding claims, wherein the polymerizable monomers comprise one or more epoxy functional monomer(s) having one C=C double bond susceptible to free radical copolymerisation, said epoxy functional monomer(s) being selected from the group consisting of allyl glycidyl ether, glycidyl acrylate, glycidyl methacrylate and mixtures thereof, preferably from the group consisting of glycidyl acrylate, glycidyl methacrylate and mixtures thereof.

6. The process according to any of the preceding claims, wherein the cationic stabilizing surfactant is selected from the group consisting of alkyltrimethylammonium chlorides, wherein the alkyl group contains from 8 to 30, preferably 12 to 25, carbon atoms; alkyltrimethylammonium bromides, wherein the alkyl group contains from 8 to 30, preferably 12 to 25, carbon atoms; alkyltrimethylammonium methylsulphates, wherein the alkyl group contains from 8 to 30, preferably 12 to 25, carbon atoms; N,N'-(lauryldimethyl)ethylenediamine dibromide, N,N,N',N',N'-pentamethyl-N-tallow-1,3-propanediammonium chloride; and ethoxylated C₈ to C₂₅ alkylamine complexes with C₈ to C₂₅ alkylguanidines.

7. The process according to any of the preceding claims, wherein the cationic stabilizing surfactant is used in the emulsion polymerisation in an amount ranging from 0.6% to 3.6% by weight, preferably from 1.2% to 3.0% by weight, expressed as a percentage of the total weight of the cationic copolymer latex emulsion.

8. The process according to any of the preceding claims, wherein the one or more non-ionic acrylate ester and/or methacrylate ester monomers (component A) used in the emulsion polymerisation process is/are employed in an amount ranging from 15% by weight to 100% by weight, preferably from 75% by weight to 100% by weight, expressed as a percentage of the total monomer components A + B + C + D.

9. The process according to any of the preceding claims, wherein the total amount of components A, B, C and D used in the emulsion polymerisation ranges from 30% to 60% by weight, preferably from 40% to 55% by weight, expressed as a percentage of the total weight of the cationic copolymer latex emulsion.

10. The process according to any of the preceding claims, wherein the cationic copolymer latex emulsion is prepared by a "core-shell" emulsion polymerisation process having two successive monomer emulsion feed stages producing a core copolymer and a shell copolymer.

11. The process according to any of the preceding claims, wherein said cationic bitumen emulsion in step (b) comprises bitumen, a continuous phase, one or more cationic surfactant(s) and optional additives.

12. A cationic latex modified hydrocarbon binder emulsion comprising bitumen, one or more cationic surfactants and a cationic copolymer latex emulsion prepared by emulsion polymerisation of polymerizable monomers, said polymerizable monomers comprising
A- one or more non-ionic acrylate ester and/or methacrylate ester monomer(s), and
B- optionally styrene monomer and/or one or more non-ionic styrene derivative monomer(s),
C- optionally one or more cross-linking monomer(s) having two or more ethylenically unsaturated (C=C) double bonds susceptible to free radical copolymerisation,
D- optionally one or more epoxy functional monomer(s) having one C=C double bond susceptible to free radical copolymerisation and one epoxide functional group,
wherein said polymerizable monomers do not comprise any aliphatic conjugated diene monomers,
in presence of a cationic stabilizing surfactant.

13. Use of a cationic latex modified hydrocarbon binder emulsion according to claim 12 for preparing surface dressings, bituminous concrete emulsions, microsurfacings and slurry seals, fog seals, cape seals and tack coats.

14. A method for preparing a bituminous product which comprises the step of contacting solid particles with the cationic latex modified hydrocarbon binder emulsion of claim 12.

15. The method of claim 14 wherein the bituminous product is a surface dressing, a bituminous concrete emulsion (BCE), a microsurfacing, a slurry seal, a cape seal, a fog seal or a tack coat.

## Patentansprüche

1. Verfahren zur Herstellung einer durch kationischen Latex veränderten Kohlenwasserstoff-Bindemittelemulsion, das die folgenden Schritte umfasst:
(a) Herstellen einer kationischen Copolymer-Latexemulsion durch eine Emulsionspolymerisation von polymerisierbaren Monomeren, wobei die polymerisierbaren Monomere umfassen:
A- ein oder mehrere nichtionische Acrylatester- und/oder Methacrylatester-Monomere, und
B- wahlweise Styrolmonomer und/oder ein oder mehrere nichtionische Styrolderivatmonomere,
C- wahlweise ein oder mehrere Vernetzungsmonomere, die zwei oder mehr ethylenisch ungesättigte (C=C)-Doppelbindungen aufweisen, die zur radikalischen Copoylmerisation befähig sind,
D- wahlweise ein oder mehrere funktionelle Epoxidmonomere, die eine C=C-Doppelbindung, die zur radikalischen Copoylmerisation befähig sind, und eine funktionelle Epoxidgruppe aufweisen,
wobei die polymerisierbaren Monomere kein aliphatisch konjugiertes Dienmonomer umfassen,
bei Vorhandensein eines kationischen stabilisierenden Tensids, und
(b) Beimengen der aus Schritt (a) resultierenden kationischen Copolymer-Latexemulsion zu einer kationischen Kohlenwasserstoff-Bindemittelemulsion, oder
(b') Beimengen der aus Schritt (a) resultierenden kationischen Copolymer-Latexemulsion zu einer Emulgatorlösung, wobei die Emulgatorlösung Wasser, ein oder mehrere kationische Tenside, eine oder mehrere Säuren und wahlweise Zusatzstoffe umfasst, um ein Gemisch bereitzustellen, und Beimengen des resultierenden Gemischs zu dem Kohlenwasserstoff-Bindemittel;
um eine durch kationischen Latex veränderte Kohlenwasserstoff-Bindemittelemulsion zu bilden.

2. Verfahren nach Anspruch 1, wobei der eine oder die mehreren nichtionischen Acrylatester- und/oder Methacrylatester-Monomere ausgewählt sind aus der Gruppe, die besteht aus C₁-C₈-Alkylacrylat und C₁-C₈-Alkylmethacrylatestern, vorzugsweise aus der Gruppe, die besteht aus Methylmethacrylat, n-Butylacrylat, 2-Ethylhexylacrylat und Gemischen davon, mehr zu bevorzugen n-Butylacrylat.

3. Verfahren nach Anspruch 1 oder 2, wobei die polymerisierbaren Monomere Styrolmonomer und/oder ein oder mehrere nicht ionische Styrolderivatmonomere umfassen, wobei das Styrolmonomer und/oder ein oder mehrere nichtionische Styrolderivatmonomere ausgewählt sind aus der Gruppe, die besteht aus Styrol, Alpha-Methylstyrol, Vinyltoluol und Gemischen davon, vorzugsweise Styrol.

4. Verfahren nach einem der vorhergehenden Ansprüche, wobei die polymerisierbaren Monomere ein oder mehrere Vernetzungsmonomere umfassen, die zwei oder mehr ethylenisch ungesättigte (C=C)-Doppelbindungen aufweisen, die zur radikalischen Copoylmerisation befähig sind, wobei die Vernetzungsmonomere ausgewählt sind aus der Gruppe, die besteht aus Methylenbisacrylamid, Divinylbenzol, Allylacrylat, Allylmethacrylat, Ethylenglycoldiacrylat oder Dimethylacrylat, Di- oder Polyacrylaten von di- oder polyfunktionellen Alkoholen, Di- oder Polymethacrylaten von di- oder polyfunktionellen Alkoholen, wobei die di- oder polyfunktionellen Alkohole ausgewählt werden können aus 1,3-Butandiol, 1,4-Butandiol, 1,6-Hexandiol, Diethylenglycol, Triethylenglycol, Dipropylenglycol, Tripolylenglycol, Trimethylolpropan, ethoxyliertem/propoxyliertem Trimethylolpropan, Glycerin, ethoxyliertem/propoxyliertem Glycerin, Pentaerythritol oder ethoxyliertem/propoxyliertem Pentaerythritol.

5. Verfahren nach einem der vorhergehenden Ansprüche, wobei die polymerisierbaren Monomere ein oder mehrere funktionelle Epoxidmonomere umfassen, die eine C=C-Doppelbindung aufweisen, die zur radikalischen Copoylmerisation befähig sind, wobei die funktionellen Epoxidmonomere ausgewählt werden aus der Gruppe, die besteht aus Allylglycidylether, Glycidylacrylat, Glycidylmethacrylat und Gemischen davon, vorzugsweise aus der Gruppe, die besteht aus Glycidylacrylat, Glycidylmethacrylat und Gemischen davon.

6. Verfahren nach einem der vorhergehenden Ansprüche, wobei das kationische stabilisierende Tensid ausgewählt wird aus der Gruppe, die besteht aus Alkyltrimethylammoniumchloriden, wobei die Alkylgruppe zwischen 8 und 30, vorzugsweise 12 und 25, Kohlenstoffatome enthält; Alkyltrimethylammoniumbromiden, wobei die Alkylgruppe zwischen 8 und 30, vorzugsweise 12 und 25, Kohlenstoffatme enthält; Alkyltrimethylammonium-Methylsulfaten, wobei die Alkylgruppe zwischen 8 und 30, vorzugsweise 12 und 25, Kohlenstoffatome enthält, N,N'-(Lauryldimehtyl)ethylendiamin-Dibromid, N,N,N',N',N'-Pentamethyl-N-talg-1,3-Propandiammoniumchlorid; und ethoxylierte C₈- bis C₂₅-Alkylaminkomplexe mit C₈- bis C₂₅-Alkylguanidinen.

7. Verfahren nach einem der vorhergehenden Ansprüche, wobei das kationische stabilisierende Tensid in der Emulsionspolymerisation in einer Menge in einem Bereich von 0,6 bis 3,6 Gew.-%, vorzugsweise von 1,2 bis 3,0 Gew.-%, ausgedrückt als ein Prozentsatz des Gesamtgewichts der kationischen Copolymer-Latexemulsion, verwendet wird.

8. Verfahren nach einem der vorhergehenden Ansprüche, wobei das eine oder die mehreren nichtionischen Acrylatester- und/oder Methacrylatester-Monomere (Komponente A), die in dem Emulsionspolymerisationsprozess verwendet werden, in einer Menge in einem Bereich von 15 Gew.-% bis 100 Gew.-%, vorzugsweise von 75 Gew.-% bis 100 Gew.-%, ausgedrückt als ein Prozentsatz der gesamten Monomerkomponenten A + B + C + D, eingesetzt werden.

9. Verfahren nach einem der vorhergehenden Ansprüche, wobei die Gesamtmenge der Komponenten A, B, C und D, die in der Emulsionspolymerisation verwendet werden, in einem Bereich von 30 bis 60 Gew.-%, vorzugsweise von 40 bis 55 Gew.-%, ausgedrückt als ein Prozentsatz des Gesamtgewichts der kationischen Copolymer-Latexemulsion, liegen.

10. Verfahren nach einem der vorhergehenden Ansprüche, wobei die kationische Copolymer-Latexemulsion durch ein "Kern-Hülle"-Emulsionspolymerisationsverfahren hergestellt wird, das zwei aufeinanderfolgende Monomeremulsionszuführungsstufen aufweist, die ein Kern-Copolymer und ein Hüllen-Copolymer herstellen.

11. Verfahren nach einem der vorhergehenden Ansprüche, wobei die kationische Bitumenemulsion in Schritt (b) Bitumen, eine kontinuierliche Phase, ein oder mehrere kationische Tenside und wahlfreie Zusatzstoffe umfasst.

12. Durch kationischen Latex veränderte Kohlenwasserstoff-Bindemittelemulsion, die Bitumen, ein oder mehrere kationische Tenside und eine kationische Copolymer-Latexemulsion umfasst, die durch Emulsionspolymerisation von polymerisierbaren Monomeren hergestellt wird, wobei die polymerisierbaren Monomere umfassen:
A- ein oder mehrere nichtionische Acrylatester- und/oder Methacrylatester-Monomere, und
B- wahlweise Styrolmonomer und/oder ein oder mehrere nichtionische Styrolderivatmonomere,
C- wahlweise ein oder mehrere Vernetzungsmonomere, die zwei oder mehr ethylenisch ungesättigte (C=C)-Doppelbindungen aufweisen, die zur radikalischen Copoylmerisation befähig sind,
D- wahlweise ein oder mehrere funktionelle Epoxidmonomere, die eine C=C-Doppelbindung, die zur radikalischen Copoylmerisation befähig sind, und eine funktionelle Epoxidgruppe aufweisen,
wobei die polymerisierbaren Monomere keine aliphatisch konjugierten Dienmonomere umfassen,
bei Vorhandensein eines kationischen stabilisierenden Tensids.

13. Verwendung einer durch kationischen Latex veränderten Bindemittelemulsion nach Anspruch 12 zur Herstellung von Oberflächenschutzschichten, bituminösen Betonemulsionen, Mikrooberflächenbeschichtungen (Microsurfacings) und bituminösen Siegelschichten (Slurry Seals), Filmbelägen (Fog Seals), Cape Seals, und Haftanstrichen.

14. Verfahren zur Herstellung eines bituminösen Produkts, das den Schritt des Inkontaktbringens von Feststoffpartikeln mit der durch kationischen Latex veränderten Kohlenwasserstoff-Bindemittelemulsion nach Anspruch 12 umfasst.

15. Verfahren nach Anspruch 14, wobei das bituminöse Produkt eine Oberflächenschutzschicht, eine bituminöse Betonemulsion (Bitumous Concrete Emulsion - BCE), eine Mikrooberflächenbeschichtung (Microsurfacing), eine bituminöse Siegelschicht (Slurry Seal), ein Cape Seal, ein Filmbelag (Fog Seal) oder ein Haftanstrich ist.

## Revendications

1. Procédé pour préparer une émulsion de liant hydrocarboné modifié par un latex cationique, comprenant les étapes de :
(a) préparation d'une émulsion de latex copolymère cationique par polymérisation en émulsion de monomères polymérisables, lesdits monomères polymérisables comprenant
A- un ou plusieurs monomères esters méthacrylates et/ou esters acrylates non-ioniques, et
B- éventuellement un monomère de styrène et/ou un ou plusieurs monomères dérivés de styrène non-ioniques,
C- éventuellement un ou plusieurs monomères de réticulation ayant deux ou plus doubles liaisons à insaturation éthylénique (C=C) capables de copolymériser par copolymérisation radicalaire,
D- éventuellement un ou plusieurs monomères fonctionnels époxy ayant une double liaison C=C capable de copolymériser par copolymérisation radicalaire et un groupe fonctionnel époxyde,
dans lequel lesdits monomères polymérisables ne comprennent aucun monomère diène conjugué aliphatique,
en présence d'un tensioactif stabilisant cationique, et
(b) addition de l'émulsion de latex copolymère cationique résultant de l'étape (a) à une émulsion de liant hydrocarboné cationique, ou
(b') addition de l'émulsion de latex copolymère cationique résultant de l'étape (a) à une solution émulsifiante, ladite solution émulsifiante comprenant de l'eau, un ou plusieurs tensioactifs cationiques, un ou plusieurs acides et éventuellement des additifs pour former un mélange, et addition du mélange résultant à un liant hydrocarboné ;
pour former une émulsion de liant hydrocarboné modifié par un latex cationique.

2. Procédé selon la revendication 1, dans lequel le ou les monomères esters méthacrylates et/ou esters acrylates non-ioniques sont choisis dans l'ensemble constitué par les esters méthacrylates d'alkyle en C₁ à C₈ et acrylates d'alkyle en C₁ à C₈, de préférence dans l'ensemble constitué par le méthacrylate de méthyle, l'acrylate de n-butyle, l'acrylate de 2-éthylhexyle et leurs mélanges, mieux encore l'acrylate de n-butyle.

3. Procédé selon la revendication 1 ou 2, dans lequel les monomères polymérisables comprennent un monomère de styrène et/ou un ou plusieurs monomères dérivés de styrène non-ioniques, lesdits monomère de styrène et/ou un ou plusieurs monomères dérivés de styrène non-ioniques étant choisis dans l'ensemble constitué par le styrène, l'alpha-méthylstyrène, le vinyltoluène et leurs mélanges, de préférence le styrène.

4. Procédé selon l'une quelconque des revendications précédentes, dans lequel les monomères polymérisables comprennent un ou plusieurs monomères de réticulation ayant deux ou plus doubles liaisons à insaturation éthylénique (C=C) capables de copolymériser par copolymérisation radicalaire, ledit ou lesdits monomères de réticulation étant choisis dans l'ensemble constitué par le méthylène-bis-acrylamide, le divinylbenzène, l'acrylate d'allyle, le méthacrylate d'allyle, le diacrylate ou diméthacrylate d'éthylèneglycol, les di- ou poly-acrylates d'alcools di- ou poly-fonctionnels, les di- ou poly-méthacrylates d'alcools di- ou poly-fonctionnels, dans lequel lesdits alcools di- ou poly-fonctionnels peuvent être choisis parmi le 1,3-butanediol, le 1,4-butanediol, le 1,6-hexanediol, le diéthylèneglycol, le triéthylèneglycol, le dipropylèneglycol, le tripropylèneglycol, le triméthylolpropane, le triméthylolpropane éthoxylé/ propoxylé, le glycérol, le glycérol éthoxylé/propoxylé, le pentaérythritol et le pentaérythritol éthoxylé/ propoxylé.

5. Procédé selon l'une quelconque des revendications précédentes, dans lequel les monomères polymérisables comprennent un ou plusieurs monomères fonctionnels époxy ayant une double liaison C=C capables de copolymériser par copolymérisation radicalaire, ledit ou lesdits monomères fonctionnels époxy étant choisis dans l'ensemble constitué par l'allylglycidyléther, l'acrylate de glycidyle, le méthacrylate de glycidyle et leurs mélanges, de préférence dans l'ensemble constitué par l'acrylate de glycidyle, le méthacrylate de glycidyle et leurs mélanges.

6. Procédé selon l'une quelconque des revendications précédentes, dans lequel le tensioactif stabilisant cationique est choisi dans l'ensemble constitué par les chlorures d'alkyltriméthylammonium dans lesquels le groupe alkyle contient de 8 à 30 et de préférence de 12 à 25 atomes de carbone ; les bromures d'alkyltriméthylammonium dans lesquels le groupe alkyle contient de 8 à 30 et de préférence de 12 à 25 atomes de carbone ; les méthylsulfates d'alkyltriméthylammonium dans lesquels le groupe alkyle contient de 8 à 30 et de préférence de 12 à 25 atomes de carbone ; le dibromure de N,N'-(lauryldiméthyl)éthylènediamine, le chlorure de N,N,N',N',N'-pentaméthyl-N-suif-1,3-propanediammonium ; et les complexes d'alkylamines en C₈ à C₂₅ éthoxylées avec des alkylguanidines en C₈ à C₂₅.

7. Procédé selon l'une quelconque des revendications précédentes, dans lequel le tensioactif stabilisant cationique est utilisé dans la polymérisation en émulsion en une quantité située dans la plage allant de 0,6 % à 3,6 % en poids, de préférence de 1,2 % à 3,0 % en poids, exprimée en pourcentage du poids total de l'émulsion de latex copolymère cationique.

8. Procédé selon l'une quelconque des revendications précédentes, dans lequel le ou les monomères esters méthacrylates et/ou esters acrylates non-ioniques (composant A) utilisés dans le procédé de polymérisation en émulsion sont employés en une quantité située dans la plage allant de 15 % en poids à 100 % en poids, de préférence de 75 % en poids à 100 % en poids, exprimée en pourcentage des composants monomères totaux A + B + C + D.

9. Procédé selon l'une quelconque des revendications précédentes, dans lequel la quantité totale des composants A, B, C et D utilisés dans la polymérisation en émulsion est située dans la plage allant de 30 % à 60 % en poids, de préférence de 40 % à 55 % en poids, exprimée en pourcentage du poids total de l'émulsion de latex copolymère cationique.

10. Procédé selon l'une quelconque des revendications précédentes, dans lequel l'émulsion de latex copolymère cationique est préparée par un procédé de polymérisation en émulsion "cœur-gaine" ayant deux étapes successives d'alimentation en émulsion de monomères, produisant un copolymère de coeur et un polymère de gaine.

11. Procédé selon l'une quelconque des revendications précédentes, dans lequel ladite émulsion de bitume cationique dans l'étape (b) comprend du bitume, une phase continue, un ou plusieurs tensioactifs cationiques et des additifs optionnels.

12. Emulsion de liant hydrocarboné modifié par un latex cationique comprenant du bitume, un ou plusieurs tensioactifs cationiques et une émulsion de latex copolymère cationique préparée par polymérisation en émulsion de monomères polymérisables, lesdits monomères polymérisables comprenant
A- un ou plusieurs monomères esters méthacrylates et/ou esters acrylates non-ioniques, et
B- éventuellement un monomère de styrène et/ou un ou plusieurs monomères dérivés de styrène non-ioniques,
C- éventuellement un ou plusieurs monomères de réticulation ayant deux ou plus de deux doubles liaisons à insaturation éthylénique (C=C) capables de copolymériser par copolymérisation radicalaire,
D- éventuellement un ou plusieurs monomères fonctionnels époxy ayant une double liaison C=C capables de copolymériser par copolymérisation radicalaire et un groupe fonctionnel époxyde,
dans laquelle lesdits monomères polymérisables ne comprennent aucun monomère diène conjugué aliphatique,
en présence d'un tensioactif stabilisant cationique.

13. Utilisation d'une émulsion de liant hydrocarboné modifié par un latex cationique selon la revendication 12 pour préparer des enduits superficiels, des émulsions de béton bitumineux, des microsurfaçages et des coulis bitumineux, des couches d'imperméabilisation, des coulis Cape Seal et des couches d'accrochage.

14. Procédé pour préparer un produit bitumineux qui comprend l'étape de mise en contact de particules solides avec l'émulsion de liant hydrocarboné modifié par un latex cationique de la revendication 12.

15. Procédé selon la revendication 14, dans lequel le produit bitumineux est un enduit superficiel, une émulsion de béton bitumineux (BBE), un microsurfaçage, un coulis bitumineux, un coulis Cape Seal, une couche d'imperméabilisation ou une couche d'accrochage.
